# EUROPEAN PATENT SPECIFICATION

(11) **EP 0 866 441 B1**
(45) Date of publication and mention of the grant of the patent: **26.09.2001**
(21) Application number: 98110226.2
(22) Date of filing: 24.02.1994
(51) Int. Cl.: G09G 3/36

(54) **Method of driving a liquid crystal display device using 8 voltage levels**
Steuerungsverfahren für Flüssigkristallanzeigeeinrichtung mit 8 Spannungspegeln
Méthode d'attaque pour appareil d'affichage à cristaux liquides avec 8 niveaux de tension

(30) Priority: 25.02.1993 JP 3705793; 24.05.1993 JP 12170693; 10.08.1993 JP 19860493; 21.10.1993 JP 26389893; 04.11.1993 JP 27573693; 29.12.1993 JP 35249393
(43) Date of publication of application: 23.09.1998
(62) Divisional of application: 94102831.8
(73) Proprietor: SEIKO EPSON CORPORATION, Shinjuku-ku, Tokyo 163-0811 (JP)
(72) Inventor: Nomura, Hiroaki, Suwa-shi, Nagano-ken (JP); Sato, Yuzuru, Suwa-shi, Nagano-ken (JP); Inoue, Akira, Suwa-shi, Nagano-ken (JP); Tanaka, Takaaki, Suwa-shi, Nagano-ken (JP); Momose, Kenichi, Suwa-shi, Nagano-ken (JP)
(74) Representative: Hoffmann, Eckart, Dipl.-Ing.

(56) References cited:
- EP-A- 0 300 755
- EP-A- 0 379 326
- US-A- 4 850 676

## Description

### BACKGROUND OF THE INVENTION

### Field of the Invention

The present invention relates to a method of driving a liquid crystal display device that uses a chiral nematic liquid crystal having two metastable states. More specifically, it relates to a drive method that improves the speed of writing. The present invention also relates to a drive method that can compensate the drive voltage to cope with irregularities in the threshold value of the liquid crystal that are specific to each liquid crystal panel, and provide temperature compensation of the drive voltage. The present invention further relates to a drive method that ameliorates the imbalance between the voltages of two different drive waveforms and makes it possible to turn the drive circuitry into an Integrated Circuit chip (IC).

### Related Art

The driving of a liquid crystal that has bistability, using a chiral nematic liquid crystal medium, has already been disclosed in Japanese Laid-Open Publication 1-51818, which includes descriptions of initial orientation conditions, two metastable states, and a method of switching between these two metastable states.

However, the drive method described in Japanese Laid-Open Publication 1-51818 has many implicit problems when it comes to practical implementation. For example, the above mentioned publication discloses two methods for switching between metastable states.

The first method obtains the two metastable states as follows: a 360° twist orientation state is obtained by using a toggle switch to suddenly turn off the voltage (60 Hz, 15 V peak-to-peak) applied to the liquid crystal; and a 0° uniform orientation state is obtained by using a variable-voltage device to allow the voltage applied to the liquid crystal to slowly fall over approximately 1 second.

The second method is as follows: if a high frequency of 1500 kHz is applied directly to the liquid crystal after a low-frequency field is turned off, a 360° twist orientation state is enabled. If the 1500-kHz high-frequency field is applied after a delay of approximately 1/4 second after the same low-frequency field has been turned off, a 0° uniform orientation state is achieved.

The first method is completely impracticable; it can never progress beyond simple verification in the laboratory. When the present inventors came to experiment with the latter method, they discovered that, if a high-frequency field is applied after a delay of approximately 1/4 second after the low-frequency field has been turned off, the same 360° twist orientation state is achieved, and it was thus impossible to switch between the two metastable states.

Further, Japanese Laid-Open Publication 1-51818 states nothing about a matrix display which is currently most appropriate for practical use and has high quality as a display device, and disclosed nothing about a drive method for such a device.

In US-A-5,594,464 and US-A-5,488,499 the inventors of the present invention disclosed a method of controlling the backflow generated in liquid crystal cells to ameliorate the above described fault However, these disclosures did not have as their objective, shortening the time required to write each line. Therefore, the time required for each embodiment of the above-mentioned disclosures to write one line of a matrix display is 400 µs, so that writing of 400 or more lines would necessitate a total of at least 160 ms (6.25 Hz). This is impracticable because it would result in flickering of the display.

In general, irregularities in the drive characteristics that are induced during the process of fabricating a liquid crystal display panel include differences in drive characteristics that depend on position within any one display panel and differences in drive characteristics between different display panels caused by differences between manufacturing lots. Therefore, to ensure that a whole liquid crystal display screen can be used with its display quality always optimized, it is necessary to provide subtle control of the drive voltage to match each panel. In addition, even if the optimal adjustment has been achieved by some method, new changes in the drive conditions are likely to be caused by variations in the surrounding temperature, so it is essential to provide further adjustment to match temperature variations.

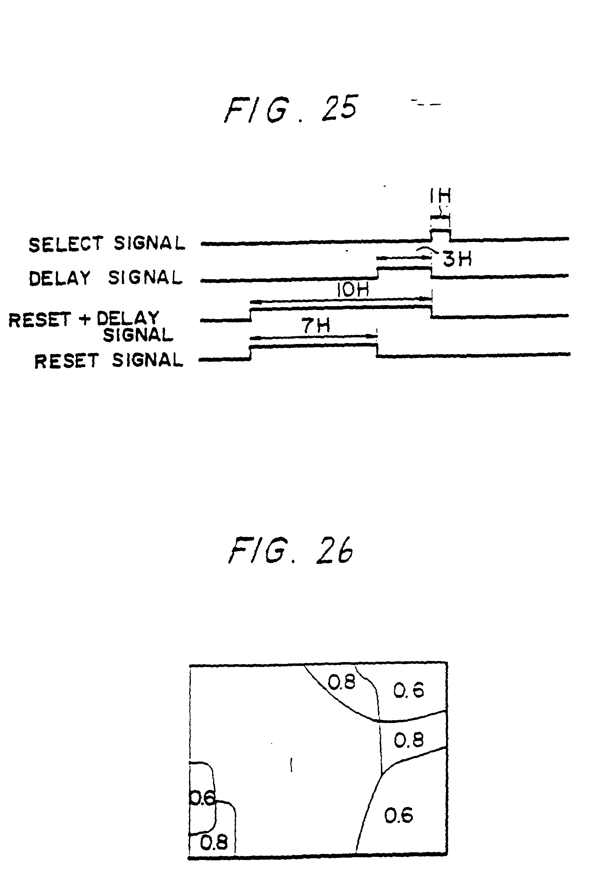

Differences in the threshold value of the drive voltage within a single panel are shown in Fig. 26. Since the drive voltage varies in this manner in response to small differences in orientation state or variations in cell gap, an optimal adjustment of the drive voltage must be done for each panel to accommodate its worst area.

When it comes to driving a liquid crystal having a memory capability, a reset pulse of a comparatively large absolute value must be applied to the liquid crystal in order to cause a Frederick's transition in the liquid crystal molecules. This causes a large imbalance in the voltage ratio between the scan and data signals during matrix drive. This imbalance is expected to lead to large problems in the configuration of specific drive circuits, or the turning of such circuits into Ics.

### SUMMARY OF THE INVENTION

An object of the present invention is to provide a method of driving a liquid crystal that can reduce the imbalance between the voltages of the scan and data signals, simplify the configuration of the drive circuitry, and make the drive circuitry suitable for incorporation in ICs, even when a reset voltage of a comparatively large absolute value is applied to the liquid crystal.

This object is achieved with a method as claimed. Preferred embodiments are subject-matter of the dependent claims.

The present invention can be applied to a drive method that comprises at least eight levels.

An eight-level drive method enables the drive of a liquid crystal using at least eight levels of potential: four types of potential are set as data potentials of the column electrode signal for applying positive or negative ON selection voltages and positive and negative OFF selection voltages to the liquid crystal, two types of potential are set as reset potentials of the row electrode signal for applying positive and negative reset voltages to the liquid crystal during the reset period, two types of potential are set as selection potentials for applying positive and negative selection voltages to the liquid crystal during the selection period, two types of data potential are set as nonselection potentials for imparting bias potentials to the above four types of the data potential during the delay period and the nonselection period, and either two types of the selection potential or two potentials among four types of data potential set to be the same as two types of the reset potential.

These eight levels of potential are divided into four levels in a first, low-voltage group (V1, V2, V3, and V4, where V1 < V2 < V3 < V4) and four levels in a second, high-voltage group (V5, V6, V7, and V8, where V4 < V5 < V6 < V7 < V8).

When the data potential of the column electrode signal is in the first group, the reset potential is selected from amongst the second group; when the data potential of the column electrode signal is in the second group, the reset potential is selected from amongst the first group.

In each of the periods other than the reset period, when the data potential of the column electrode signal is in the first group, one potential could be selected from the same first group; when the data potential of the column electrode signal is in the second group, one potential could be selected from the same second group.

This ensures that a reset voltage of a comparatively large absolute value of over 20 V and a nonselection voltage in the vicinity of 1 V can be applied to the liquid crystal, without having to generate a large voltage difference between the voltage of the row electrode signal and the voltage of the column electrode signal. This makes it easier to configure the drive circuitry, and is particularly favorable for the fabrication of an IC.

In this case, if the potential difference between potential V4 of the first group and potential V5 of the second group is large, the absolute value of the reset voltage applied to the liquid crystal during the reset period can also be set to be large.

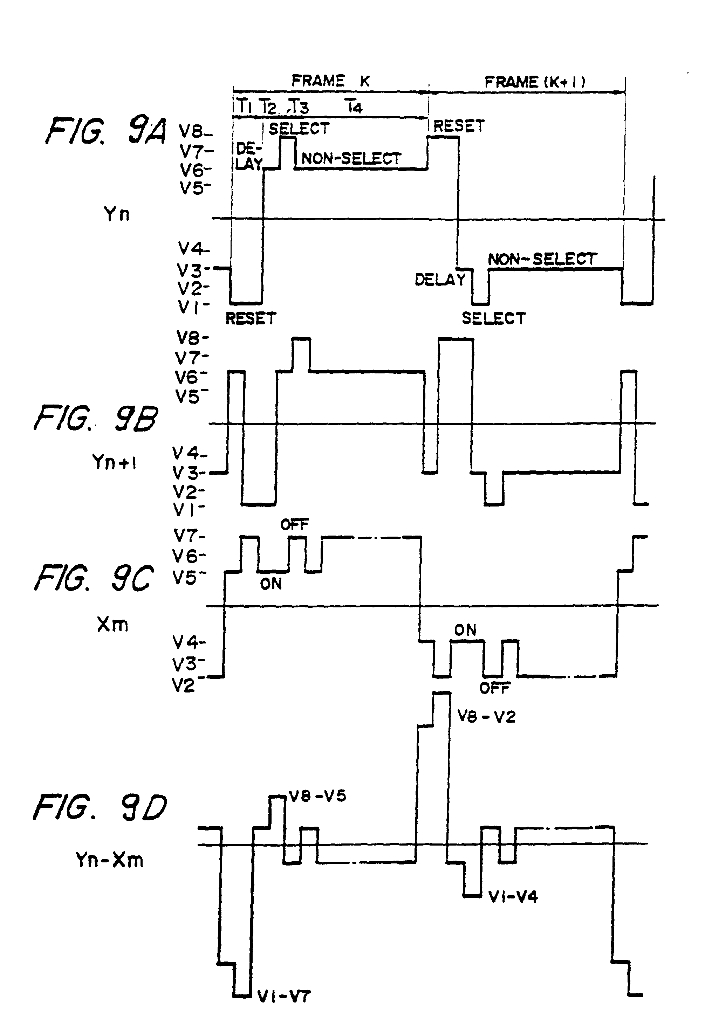

In a kth frame (where k is an integer), the ON selection potential of column electrode signal Xm is set to V5 of the second group and the OFF selection potential is set to V7, as shown in Fig. 9. The reset potential of row electrode signal Yn is set to V1, the selection potential to V8, and the nonselection potential to V6.

In the subsequent (k+1)th frame, the ON selection potential of column electrode signal Xm is set to V4 of the first group and the OFF selection potential to V2. The reset potential of row electrode signal Yn is set to V8, the selection potential to V1, and the nonselection potential to V3, thus enabling an alternating drive for the liquid crystal in which the polarity is inverted every frame.

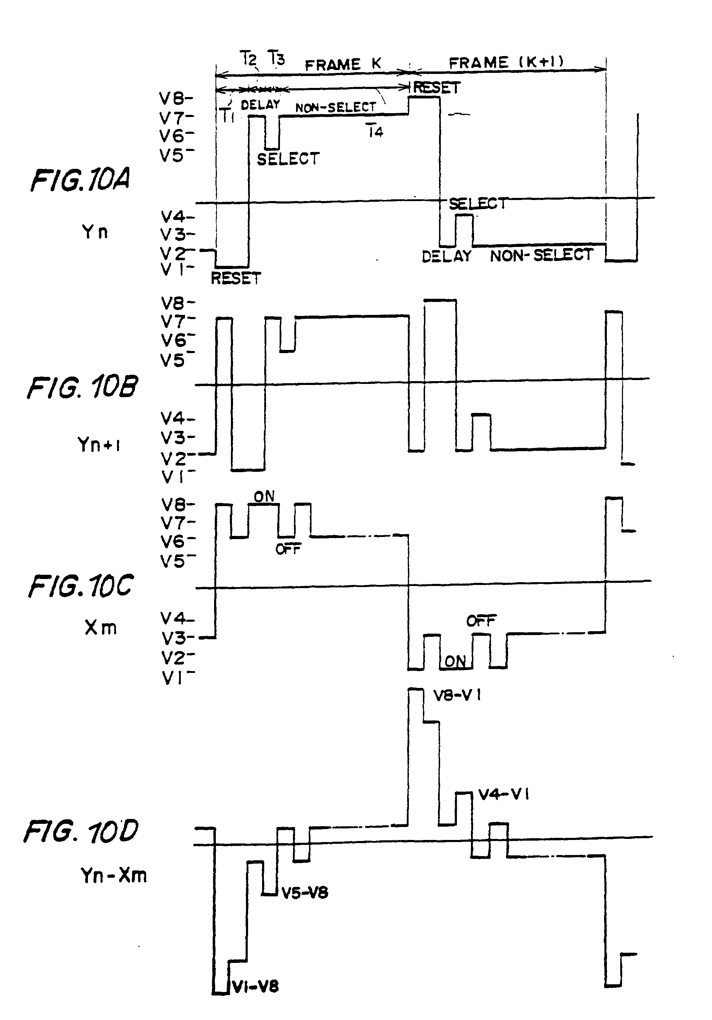

Alternatively, in the kth frame (where k is an integer), the ON selection potential of column electrode signal Xm is set to V8 of the second group and the OFF selection potential to V6, as shown in Fig. 10. The reset potential of row electrode signal Yn is set to V1, the selection potential to V5, and the nonselection potential to V7.

In the subsequent (k+1)th frame, the ON selection potential of column electrode signal Xm is set to V1 of the first group and the OFF selection potential to V3. The reset potential of row electrode signal Yn is set to V8, the selection potential to V4, and the nonselection potential to V2, thus enabling an alternating drive for the liquid crystal in which the polarity is inverted every frame.

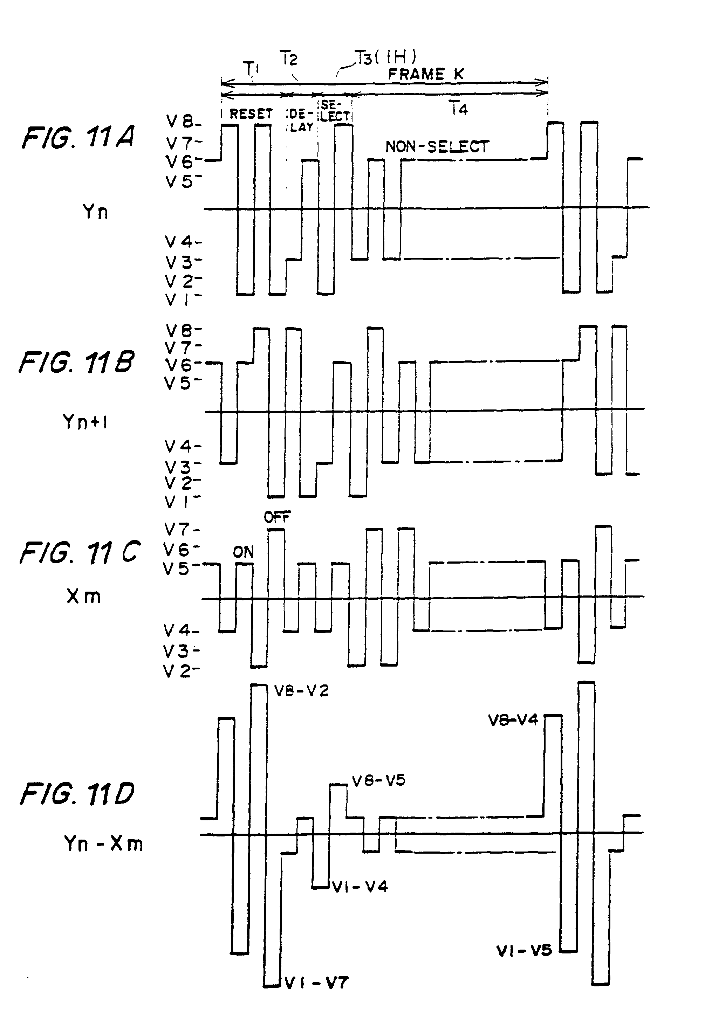

As a further alternative, the ON selection potential of column electrode signal Xm within one frame period T is set by alternating pulses between V4 and V5, and the OFF selection potential of column electrode signal Xm is set by alternating pulses between V2 and V7, as shown in Fig. 11. In a sequence corresponding thereto, the reset potential of row electrode signal Yn is set by alternating pulses between V8 and V1, the selection potential by alternating pulses between V1 and V8, and the nonselection potential by alternating pulses between V3 and V6.

This enables an alternating drive for the liquid crystal in which the polarity of the voltage applied to the liquid crystal is inverted every pulse.

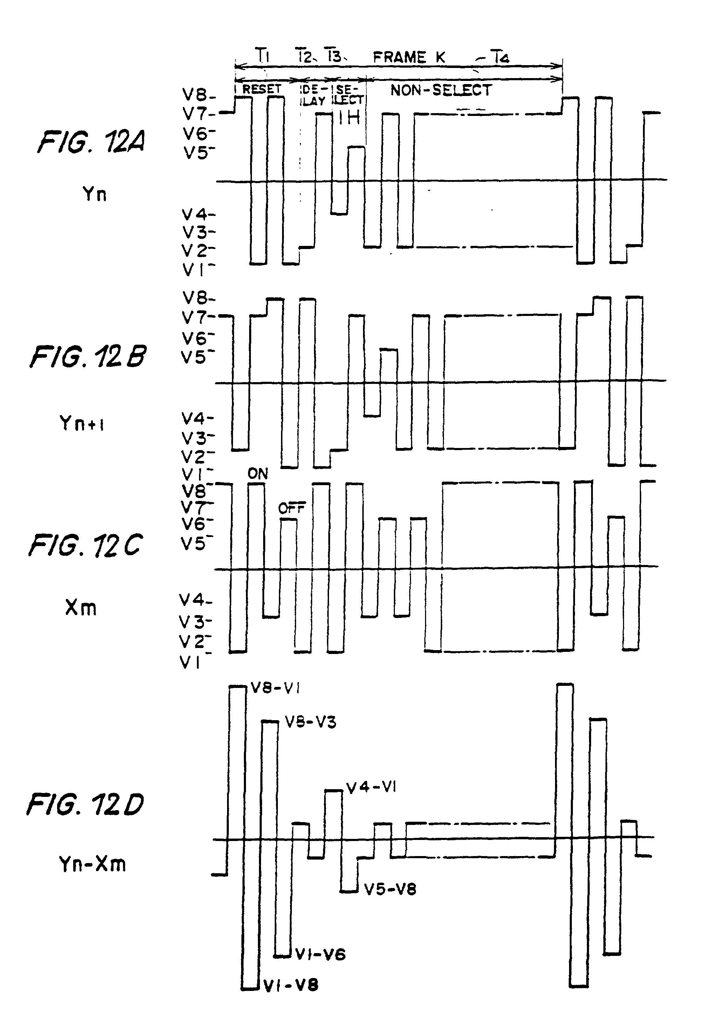

As a yet further alternative, the ON selection potential of column electrode signal Xm within one frame period T is set by alternating pulses between V1 and V8, and the OFF selection potential of column electrode signal Xm is set by alternating pulses between V3 and V6, as shown in Fig. 12. In a sequence corresponding thereto, the reset potential of row electrode signal Yn is set by alternating pulses between V8 and V1, the selection potential by alternating pulses between V4 and V5, and the nonselection potential by alternating pulses between V2 and V7. This enables an alternating drive for the liquid crystal in which the polarity of the voltage applied to the liquid crystal is inverted at each pulse.

In the drive methods of Figs. 9 and 11, if the relationships V4 - V3 = V3 - V2 = V7 - V6 = V6 - V5 are set, approximately equal nonselection voltages can be applied to nonselection period T4.

In the drive methods of Figs. 10 and 12, if the relationships V3 - V2 = V2 - V1 = V8 - V7 = V7 - V6 are set, approximately equal nonselection voltages can be applied to the liquid crystal in nonselection period T4.

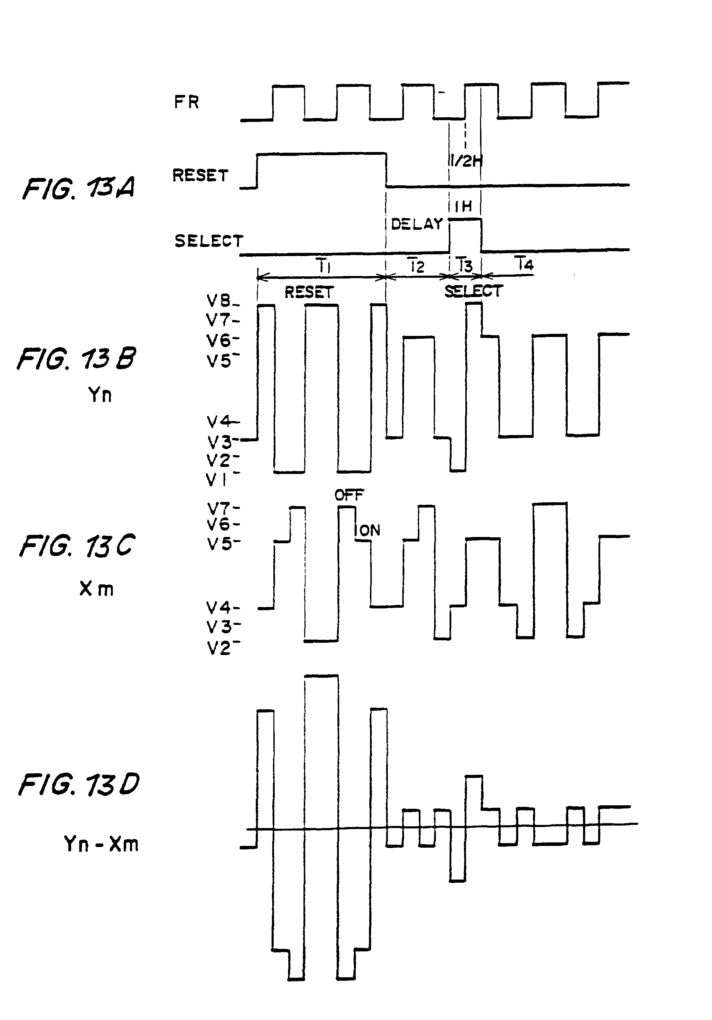

In the drive methods of Figs. 11-12, if a unit time equivalent to selection period T3 is termed 1H, the pulse width of a signal FR that causes the row and column electrode signals to alternate is also 1H, and the phase of signal FR can be set to be offset by (1H/2) with respect with the selection period of row electrode signal Yn. A drive method where this is applied to the drive method of Fig. 11 is shown in Fig. 13. In this case, the numbers of inversions of the drive potentials of the row and column electrode signals are half those of Fig. 11, but the number of inversions of the voltage applied to the liquid crystal can be guaranteed to be more.

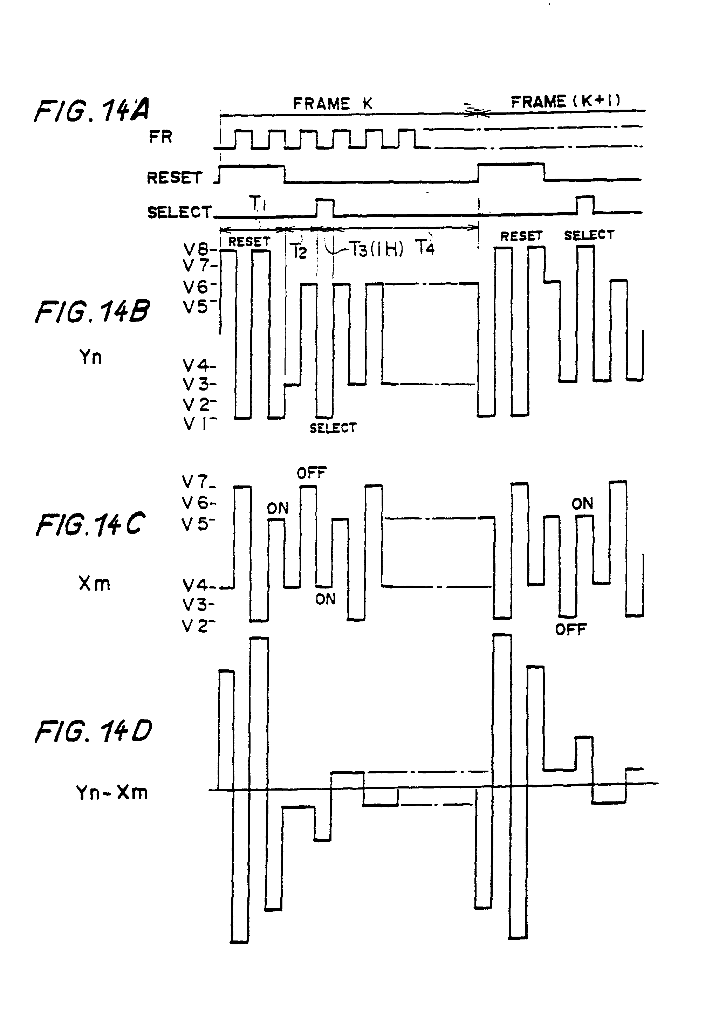

Further, in the drive methods of Figs. 11 and 12, the polarity of the voltage applied to the liquid crystal is inverted at each unit time equivalent to selection period T3 (1H) so that, if the polarity at the beginning of the kth frame (where k is an integer) is positive, the polarity at the beginning of the (k+1)th frame is made negative; if the polarity at the beginning of the kth frame is negative, the polarity at the beginning of the (k+1)th frame is made positive. This enables an alternating drive for the liquid crystal in which polarity inversions every 1 H and every frame are combined. A drive method where this is applied to the drive method of Fig. 11 is shown in Fig. 14.

When each of the drive methods of Figs. 9-14 is implemented, it is best from the circuit design point of view to have the voltages in the first group and the voltages in the second group set to be symmetrical in the positive and negative directions with respect to a center of the ground-level potential.

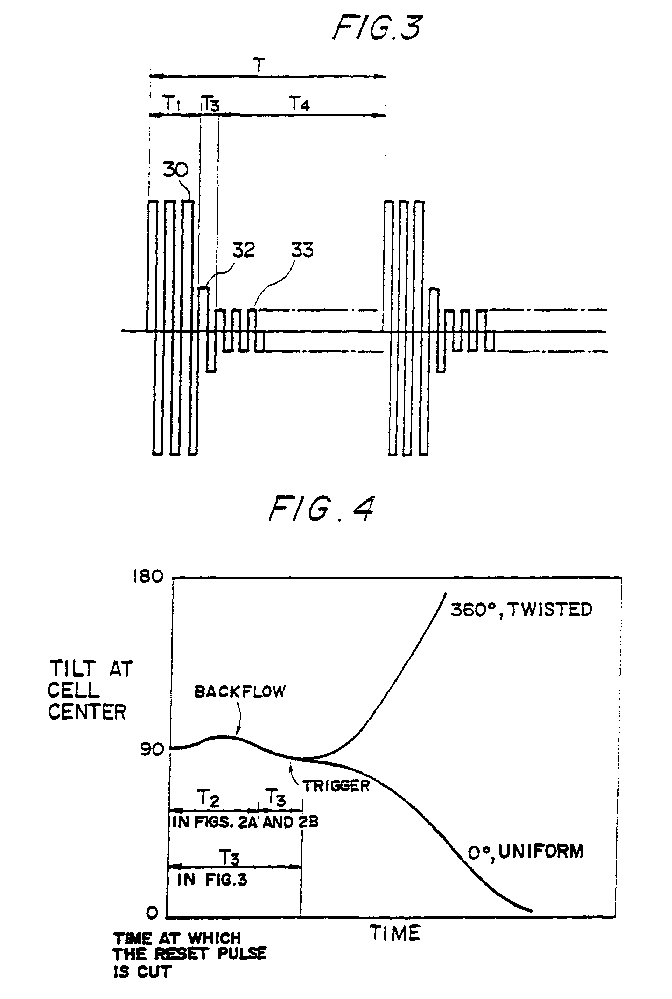

The above described seven-level and eight-level drive methods are not necessarily limited to application to a drive waveform that specifies delay period T2 within one frame period T; they are also effective for the drive waveform shown in Fig. 3, which does not specify delay period T2.

Other objects and attainments together with a fuller understanding of the invention will become apparent and appreciated by referring to the following description and claims taken in conjunction with the accompanying drawings.

### BRIEF DESCRIPTION OF THE DRAWINGS

Fig. 1 is an abbreviated cross-sectional view of a liquid crystal cell used by embodiments of the liquid crystal display device in accordance with the present invention.

Figs. 2A and 2B each show a drive waveform of a first embodiment, used in experiments relating to the present invention.

Fig. 3 shows a drive waveform in which there is no delay period.

Fig. 4 is a graph illustrating the behavior of molecules of a bistable liquid crystal used by embodiments of the present invention.

Fig. 5 is a block diagram of the entire liquid crystal drive circuitry.

Fig. 6 shows a matrix drive waveform relating to a second embodiment that applies the present invention.

Fig. 7 shows pulse voltage characteristics of the matrix drive waveform of Fig. 6.

Figs. 8A to 8D show matrix drive waveforms of row and column electrode signals and a difference signal therebetween, illustrating drive waveforms used in the second embodiment of the present invention.

Figs. 9A-9D show drive waveforms in accordance with the eight-level drive method relating to a first embodiment of the present invention.

Figs. 10A-10D show drive waveforms in accordance with the eight-level drive method relating to a second embodiment of the present invention.

Figs. 11A-11D show drive waveforms in accordance with the eight-level drive method relating to an third embodiment of the present invention.

Figs. 12A-12D show drive waveforms in accordance with the eight-level drive method relating to a fourth embodiment of the present invention.

Figs. 13A-13D show drive waveforms in accordance with the eight-level drive method relating to a fifth embodiment of the present invention.

Figs. 14A-14D show drive waveforms in accordance with the eight-level drive method relating to a sixth embodiment of the present invention.

Fig. 15 is a block diagram of the Y driver circuit of the seventh embodiment of the present invention, used for creating the scan signal waveform shown with reference to the first to seventh embodiments.

Fig. 16 is a block diagram of the X driver circuit of the eighth embodiment of the present invention, used for creating the data signal waveform shown with reference to the first to seventh embodiments.

Fig. 17 shows the entire configuration of a matrix liquid crystal drive circuit according to a eighth embodiment of the present invention.

Fig. 18 is a block diagram of the Y driver circuit of Fig. 17.

Fig. 19 is a block diagram of the X driver circuit of Fig. 17.

Fig. 20 is a timing chart used to illustrate the operation of the various components of the Y driver circuit of Fig. 18.

Fig. 21 is a timing chart used to illustrate the operation of the data latch of the X driver circuit of Fig. 19.

Fig. 22 shows the drive waveforms generated in the drive circuits of Fig. 17.

Fig. 23 shows signal waveforms that change the length of the delay period, in accordance with a ninth embodiment of the present invention.

Fig. 24 shows signal waveforms where the delay period of Fig. 23 is changed from 2H to 3H.

Fig. 25 shows signal waveforms where the delay period of Fig. 23 is changed from 2H to 3H and the reset period is changed from 5H to 7H.

Fig. 26 shows a typical distribution of threshold value of the liquid crystal within a liquid crystal panel.

### DETAILED DESCRIPTION OF THE INVENTION

### Configuration of Liquid Crystal Cell

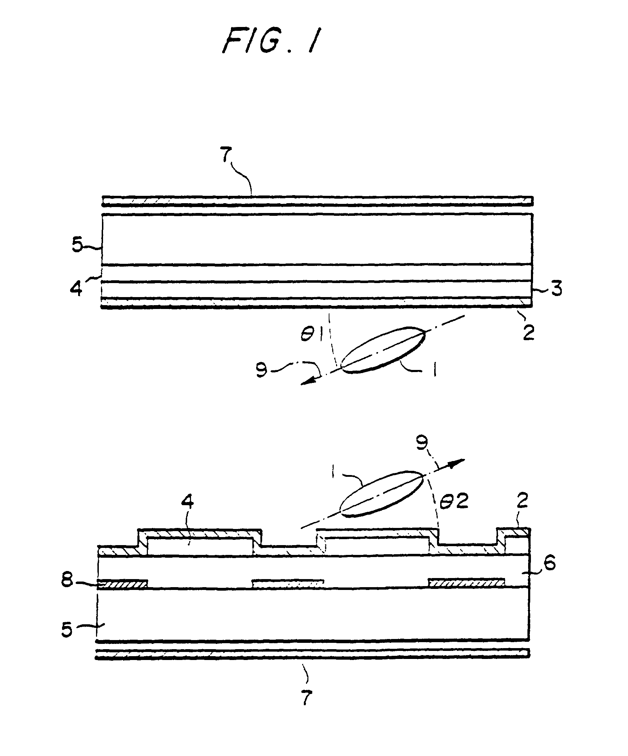

The liquid crystal medium used in each of the embodiments described below is formed by adding a chiral dopant (e.g., such as that available from E. Merck Corp. as product No. S811) to a nematic liquid crystal (e.g., such as that available from E. Merck Corp. as product No. ZLI3329), with the helical pitch of the liquid crystal being adjusted to 3 to 4 µm. As shown in Fig. 1, a pattern of transparent electrodes 4 is formed of indium tin oxide (ITO) on upper and lower glass substrates 5, and a polyimide orientation film 2 (of, e.g., product SP-740 from Toray Corp.) is painted over each pattern. Each polyimide orientation film 2 is then subjected to rubbing in directions that differ from each other by a predetermined angle ø (in these embodiments, ø= 180°). Spacers are inserted between upper and lower glass substrates 5 to ensure that the substrate gap is kept uniform at, e.g., a substrate gap (cell gap) of 2 µm or less. Thus, the ratio of the thickness of the liquid crystal layer to the twist pitch is 0.5 ±0.2.

When the liquid crystal medium is inserted into this cell, pretilt angles θ1 and θ2 of liquid crystal molecules 1 are small, and the initial orientation is a 180° twist state. This liquid crystal cell is sandwiched between two polarizing plates 7 that have different directions of polarization, as shown in Fig. 1, to form a display panel. Reference numeral 3 denotes an isolation layer, 6 denotes a planarizing layer, 8 denotes a masking layer between pixels, and 9 denotes a direction vector of liquid crystal molecules 1.

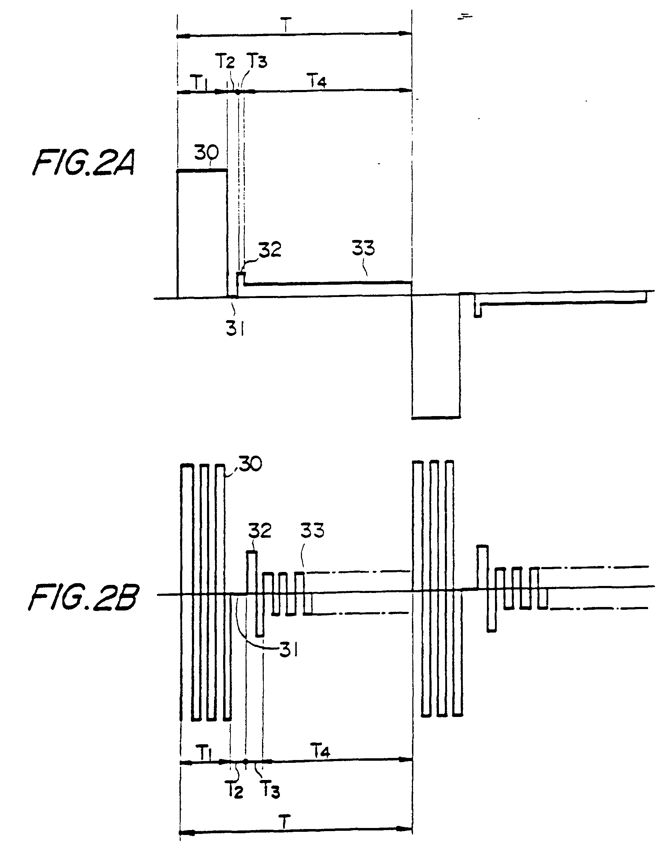

Two types of drive waveform relating to a first embodiment of the present invention, for driving the display panel shown of Fig. 1, are shown in Figs. 2A and 2B. Each drive waveform in these figures includes a reset period T1, a delay period T2, a selection period T3, and a nonselection period T4 within one frame period T. Fig. 2A shows an alternating drive waveform in which the polarity of the voltage that causes the liquid crystal cell to be charged is inverted once every frame period T. Fig. 2B shows an alternating drive waveform in which the polarity of the voltage that causes the liquid crystal cell to be charged is inverted once every pulse of pulse width (T3)/2. In each of these figures, a reset voltage (reset pulse) 30 that is greater than or equal to the threshold value that brings about a Frederick's transition in nematic liquid crystal is applied during reset period T1. In this embodiment, the peak value of reset voltage 30 is set to ±30 V. The delay period T2 is provided to delay the timing at which a selection voltage (selection pulse) 32 is applied to the liquid crystal cell during selection period T3, after reset voltage 30 has been applied to the liquid crystal cell. In this embodiment, a voltage which is the same as nonselection voltage 33, e.g., is applied to the liquid crystal cell during delay period T2 as a delay voltage 31. Selection voltage 32 applied to the liquid crystal cell in selection period T3 is selected with reference to a critical value that causes either of two metastable states in the nematic liquid crystal, such as a 360° twist orientation state and a 0° uniform orientation state. with the chiral nematic liquid crystal used in the first embodiment, if the peak value of selection voltage 32 is between zero and ±1 V, a 360° twist orientation state is obtained. On the other hand, if a voltage of 2 V or more is applied to the liquid crystal cell as selection voltage 32, a 0° uniform orientation state is obtained. During non-selection period T4, a nonselection voltage 33 of an absolute value smaller than selection voltage 32 is applied to the liquid crystal cell so that the liquid crystal can be maintained in the state selected in selection period T3.

A drive waveform is shown in Fig. 3 as a comparative example. The drive waveform shown in Fig. 3 is that disclosed previously by the applicants of the present invention in US-A-5,594,464 and US-A-5,488,499. The drive method of Fig. 3 is similar to those of Figs. 2A and 2B in that a reset period T1, a selection period T3, and a nonselection period T4 are provided within one frame period, but differs therefrom in that delay period T2 is not provided. In other words, the drive method of the first embodiment shown in Figs. 2A and 2B differs greatly from the drive method of Fig. 3 in that selection voltage 32 is applied to the liquid crystal cell after delay period T2 has elapsed after the application of reset voltage 30.

Experimental results based on the drive method of either Fig. 2A or Fig. 2B are summarized in Table 2. For comparison, results based on the drive method of Fig. 3 are listed in Table 1. The display referenced in both tables was a transparent display with a backlight, wherein the ON state corresponded to a 0° uniform orientation state that passes light through and the OFF state corresponded to a 360° twist orientation state that shuts light out.

In Tables 1 and 2, the duty ratio is the ratio of (selection period T3)/(frame period T), the pulse width is that of the selection pulse, and the delay time is the length of delay period T2. In the drive method of Fig. 2A, the pulse width is equal to T3, whereas in the drive methods of Figs. 2B and 3, the pulse width is equal to (T3)/2. In each of Figs. 2A, 2B, and 3, the write time for one line matches selection period T3. In each of Tables 1 and 2, the ON voltage is the value of selection voltage 32 applied to the liquid crystal cell that causes the 0° uniform orientation state in the liquid crystal cell. The OFF voltage is the value of selection voltage 32 applied to the liquid crystal cell that causes the 360° twist orientation state.

**Table 1**

| Waveform | Duty Ratio | Pulse width T₃/2(µs) | Delay Time (µs) | ON Voltage (V) | OFF Voltage (V) | ON/OFF Capability |
|---|---|---|---|---|---|---|
| Fig. 3 | 1/60 | 200 | 0 | 2 | 0 | Yes |
| | 1/120 | 100 | 0 | 2 | 0 | Yes |
| | 1/240 | 50 | 0 | 3 | 0 | No |

**Table 2**

| Waveform | Duty Ratio | Pulse Width (µs) | Delay Time (µs) | ON Voltage (V) | OFF Voltage (V) | ON/OFF Capability |
|---|---|---|---|---|---|---|
| Fig. 2A | 1/240 | 100 (=T₃) | 0 | 3 | 0 | No |
| | | | 100 | 3 | 0 | Yes |
| | | | 200 | 3 | 0 | Yes |
| Fig. 2B | 1/240 | 50 (=T₃/2) | 0 | 3 | 0 | No |
| | | | 50 | 3 | 0 | Yes |
| | | | 100 | 3 | 0 | Yes |
| | | | 200 | 3 | 0 | Yes |
| Fig. 2A | 1/480 | 50 (=T₃) | 0 | 3 | 0 | No |
| | | | 50 | 3 | 0 | No |
| | | | 100 | 3 | 0 | No |
| | | | 200 | 3 | 0 | No |
| | | | 0 | 5 | 0 | No |
| | | | 50 | 5 | 0 | Yes |
| | | | 100 | 5 | 0 | Yes |
| | | | 150 | 5 | 0 | Yes |
| Fig. 2B | 1/480 | 25 (=T₃/2) | 0 | 5 | 0 | No |
| | | | 50 | 5 | 0 | Yes |
| | | | 100 | 5 | 0 | Yes |
| | | | 250 | 5 | 0 | Yes |

As can be seen from a comparison of Tables 1 and 2, if a delay time is inserted after the application of reset voltage 30 and then selection voltage 32 is applied to the liquid crystal cell, the liquid crystal can be switched on and off even when selection voltage 32 of a pulse width that cannot provide switching of the display with the drive method of Fig. 3 is applied to the liquid crystal. For example, with the conditions shown in Table 1 of a duty ratio of 1/240, a pulse width of 50 µs, ON/OFF voltages of 3V/0V, and a delay time of 0, it is not possible to switch the display on and off. However, as shown in Table 2, if a delay time of at least 50 µs is inserted before the same selection voltage 32 is applied to the liquid crystal cell, it becomes possible to switch the display on and off. In other words, this means that the write required to write one line with a matrix type of display can be improved such that the 200 µs of the prior art method is halved to 100 µs. If the ON voltage is raised from 3 V to 5 V with a delay time of at least 50 µs, it has been verified that the time required to write one line can be further shortened to 50 µs, even in response to a pulse of pulse width 25 µs.

The results of dynamic simulation of the behavior of a bistable liquid crystal used with the present invention, and the relationship between delay period T2 and selection period T3 are shown in Fig. 4. In this graph, time is plotted along the X-axis, and the tilt of molecules at the center of the liquid crystal cell is plotted along the Y-axis, with a start point being the time at which the reset pulse is cut. As can be seen from this figure, after the liquid crystal molecules are in a vertically standing state (homeotropic orientation state), they fall slightly backward (backflow), then return and are divided into those that proceed to a tilt of 0° and those that move on through a further 180°. The former is a transition to a 0° uniform orientation state and the latter corresponds to a transition to a 360° twist orientation state where a twist is added to the change in tilt. It is clear from this figure that the behavior of the liquid crystal immediately after the reset pulse 30 is cut and up through the same backflow process is exactly the same regardless of whether the eventual transition is to the 0° uniform orientation state or the 360° twist orientation state. In other words, it's a trigger (the arrow in Fig. 4) after the backflow that determines whether the orientation state of the liquid crystal is 0° or 360°.

With the drive waveform of Fig. 3, which was disclosed in the two US Patents mentioned above, selection period T3 is set immediately after reset period T1 has expired, as shown in Fig. 4. With the drive method shown in Fig. 3, the liquid crystal can be turned on and off so long as this selection period T3 is extended as far as the timing at which this trigger ought to be imposed, after backflow has occurred in the liquid crystal. In fact, Table 1 shows that if the length of selection period T3 is set to either 400 µs or 200 µs, it is possible to switch the liquid crystal on and off, but if the length of selection period T3 is set to 100 µs, it is no longer possible to switch the liquid crystal on and off.

In contrast, by inserting delay period T2 between reset period T1 and selection period T3, and adjusting the length of delay period T2, the drive method of Figs. 2A and 2B which concerns the drive method of the first embodiment makes it possible to apply selection voltage 32 to the liquid crystal at the timing at which this trigger ought to be imposed after backflow has ended, without having to adjust the length of selection period T3. That is why it becomes possible to switch the liquid crystal on and off with this embodiment, even when the length of selection period T3 is greatly reduced to 50 µs, as shown in Table 2.

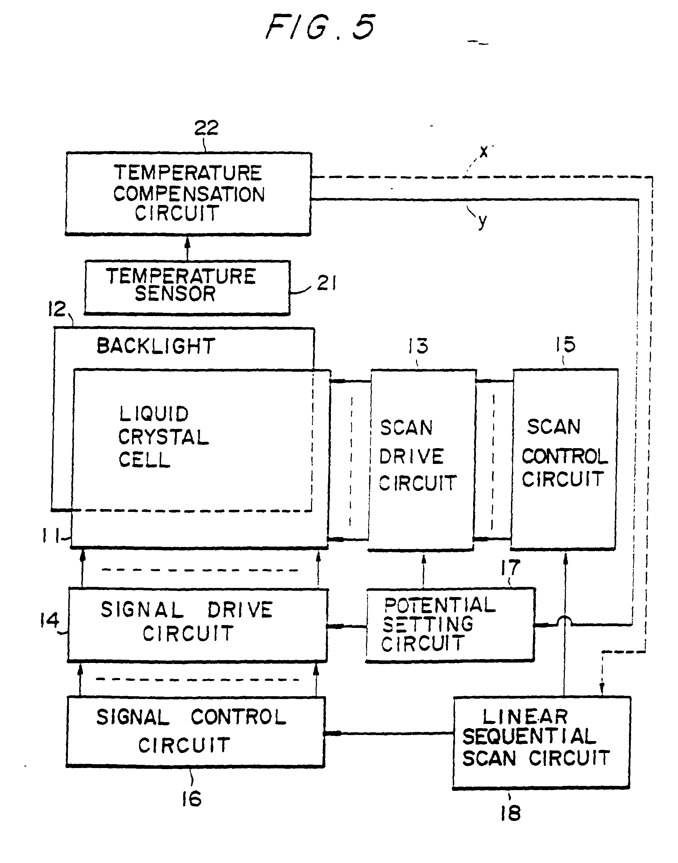

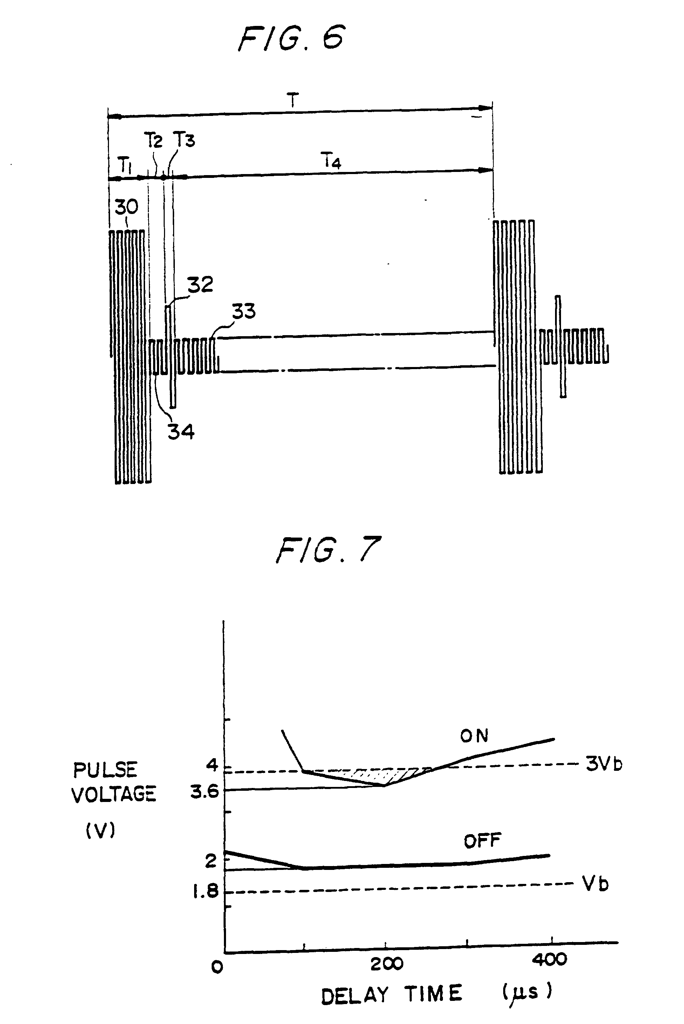

A simple matrix type of liquid crystal display panel shown in Fig. 5 was fabricated using the liquid crystal cell shown in Fig. 1. This liquid crystal display panel is of a transparent type with a backlight 12 positioned at a back surface of a liquid crystal cell 11. A scan drive circuit 13 is connected to scan electrodes (row electrodes) of the liquid crystal cell 11, and this scan drive circuit 13 is controlled by a scan control circuit 15. Similarly, signal electrodes (column electrodes) are connected to a signal drive circuit 14 of liquid crystal cell 11, and signal drive circuit 14 is controlled by a signal control circuit 16. A predetermined applied voltage from a potential setting circuit 17 is supplied to scan drive circuit 13 and signal drive circuit 14. A reference clock signal and a predetermined timing signal are supplied to scan control circuit 15 and signal control circuit 16 from a line sequential scan circuit 18.
The drive waveform used to drive the simple matrix type of liquid crystal display panel of Fig. 5 is shown in Fig. 6. A bias voltage 34 is the same as nonselection voltage 33 during delay period T2 after reset voltage 30, and is inevitably applied when the pixels of other rows are selected. In the drive waveform shown in Fig. 6, the length of selection period T3 matches one horizontal scanning period (1H). The length of delay period T2 is set to be (1H/2) x n (where n is an integer), from consideration of the fact that the drive alternates once every pulse of pulse width 1H/2.

A graph used to obtain the selection voltage range that enables a 0° uniform orientation state and a 360° twist orientation state, using the drive waveform of Fig. 6, is shown in Fig. 7. Delay time is plotted along the X-axis and the voltage of pulses applied to the liquid crystal is plotted along the Y-axis. With a reset voltage of 30 V and a hold time of 1 ms, a bias voltage of 1.3 V, and a pulse width of the selection pulse of 50 µs, which means that the write time for one line is 50 x 2 = 100 µs. A liquid crystal cell of the same construction as that of the first embodiment was used, with the ratio of cell gap d to pitch p being 0.6. It can be seen from this graph that a 360° twist orientation state (display is off) can be resisted up to a peak selection voltage of 1.8 V, and that switching of a 0° uniform orientation state (display is on) is achieved by a minimum selection voltage of 3.6 V, when the delay time is 200 µs. As a result, the drive waveform after reset is configured in accordance with a 1/3 bias method, and, if the bias voltage and the OFF voltage during selection are each at Vb = 1.3 V and the ON voltage during selection is 3Vb = 3.9 V, drive of a simple matrix of 200 to 240 rows is obtained with a write speed of 100 µs/line. When the drive waveform in accordance with the 1/3 bias method is configured, the delay time can be chosen to be where the ON voltage shown by the solid line in Fig. 7 lies below the ON selection voltage 3Vb shown by a broken line in Fig. 7 (hatched area in Fig. 7).

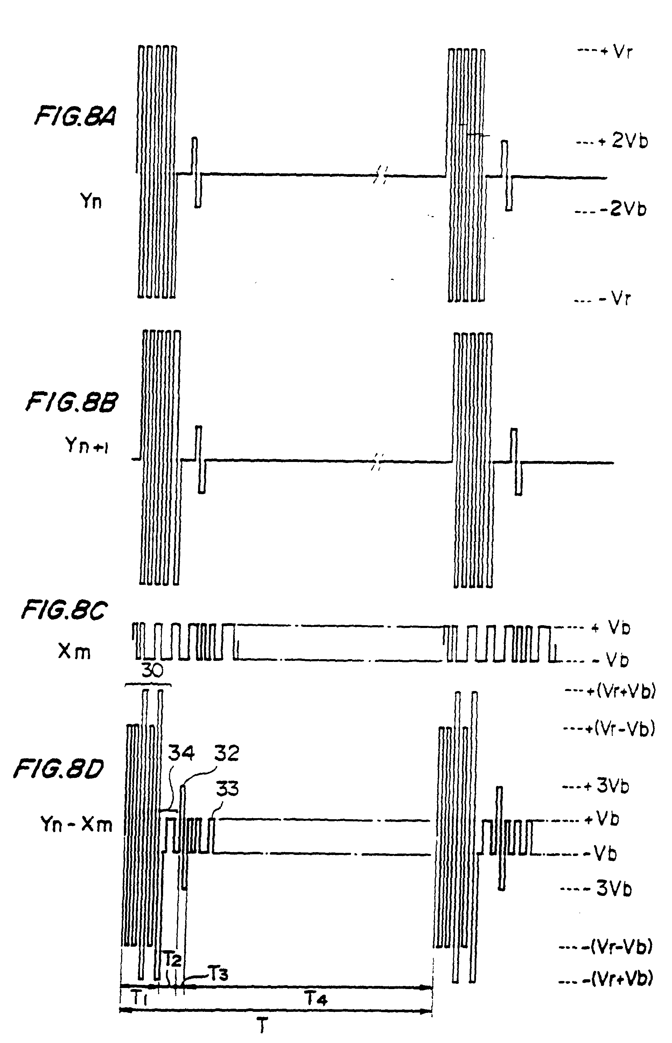

The drive waveforms of each row, column, and pixel of the matrix in accordance with the 1/3 bias method are shown in Figs. 8A-8D. In these figures, Yn and Yn+1 indicate scan signals (row electrode signals) for driving the nth and (n+1)th row electrodes. These scan signals Yn and Yn+1 are set to the reset potential at the peak value ±Vr during reset period T1, to 0 V during delay period T2, to the selection potential at the peak value ±2Vb during selection period T3, and to the nonselection potential of 0 V during nonselection period T4. Xm indicates the waveform of the data signal supplied to the column electrode of the mth column. The peak value of this data signal is ±Vb. If the data signal is of the opposite phase to the waveform during selection period T3 of the above described scan signal, the liquid crystal cell is driven on; if it is of the same phase, the liquid crystal cell is driven off. The difference signal Yn-Xm indicates the drive waveform applied to the liquid crystal of the pixel at the intersection between the nth row electrode and the mth column electrode. This difference signal Yn-Xm is at reset voltage 30, which has a maximum peak value of ±(Vr + Vb), during reset period T1, and at bias voltage 34, which has a maximum peak value of ±Vb, during delay period T2. As shown in Fig. 8, this signal is set to a selection voltage 32 for driving the liquid crystal at a peak value of ±3Vb during selection period T3, then to nonselection voltage 33 at a peak value of ±Vb dunng nonselection period T4.

By combining this drive waveform with a divided matrix or multiplexed matrix (refer to p. 406 of the Liquid Crystal Device Handbook, published by the Nikkan Kogyo Shimbun, Ltd.), a 640 x 480 VGA-compatible display can be implemented.

Fig. 8 shows a drive waveform using seven voltage levels that are voltage levels of the scan and data signals. In other words, there are two voltage levels for the data signal Xm: ±Vb, and a total of five levels for scan signal Yn: ±Vr, ±2Vb, and zero. In this case, the voltage level Vr of scan signal Yn in reset period T1 must exceed 20 V. On the other hand, a voltage in the vicinity of 1 V is sufficient as the voltage level Vb of the data signal Yn. Therefore, with the drive waveform shown in Fig. 8, a large potential difference is created between scan signal Yn and the data signal Xm. Further, even within the same scan signal Yn waveform, a voltage difference in the vicinity of 20 V is created between the voltage Vr and the voltage 2Vb.

Thus, in a display drive method using a liquid crystal having two metastable states, the ratio of the voltage of the scan signal to that of the data signal during the matrix drive is large and unbalanced, so there are serious problems involved in designing a drive circuit configuration in practice. This imbalance causes particularly large problems when it comes to turning this drive circuitry into an IC.

In the prior art, a six-level drive method has been proposed as a voltage-averaging drive method for a matrix liquid crystal display device (refer to p. 401 of the Liquid Crystal Device Handbook, published by Nikkan Kogyo Shimbun, Ltd.). This six-level drive method is effective in balancing the drive voltages of the waveforms of the scan and data signals, and making the ratio of the ON voltage to the bias voltage large. However, a reset voltage of a comparatively large value is necessary to drive the liquid crystal that is the target of the present invention, so this six-level drive method is unable to solve the above described problem. Methods of driving a liquid crystal by at least eight drive levels in accordance with the present invention are described below by way of various embodiments. In each of the embodiments below, delay period T2 is provided between reset period T1 and selection period T3 of the scan signal, but the eight-level drive method can also be applied to drive methods in which this delay period T2 is not provided, such as that shown in Fig. 3.

### First Embodiment

A drive waveform in accordance with a sixteenth embodiment of the present invention is shown in Fig. 9. Scan signals Yn and Yn+1 indicate the scan signals supplied to the nth and the (n+1)th row electrodes, respectively. Eight levels of potential that set these scan and data signals are provided: four levels in a first, low-voltage group (V1, V2, V3, and V4, where V1 < V2 < V3 < V4) and four levels in a second, high-voltage group (V5, V6, V7, and V8, where V4 < V5 < V6 < V7 < V8). As shown in Fig. 9, the data signal Yn for the kth frame (where k is an integer) is set to voltage V1 during reset period T1, voltage V6 during delay period T2, voltage V8 during selection period T3, and voltage V6 during nonselection period T4. In the subsequent (k+1)th frame, the equivalent levels are symmetrical with those of the kth frame about a voltage midway between V4 and V5. In other words, scan signal Yn for the (k+1)th frame is set to voltage V8 during reset period T1, voltage V3 during delay period T2, voltage V1 during selection period T3, and voltage V3 during nonselection period T4. Although not shown in the figure, the subsequent (k+2)th frame has the same waveform as that of the kth frame, and the waveform repeats the same relationship thereafter.

Scan signal Yn+1 is the waveform of the next row's scan signal. It differs from scan signal Yn in that each of reset period T1, delay period T2, and selection period T3 are shifted by the time (1H) required for one line. The beginning and end of the first frame are at the same point as in scan signal Yn, but the waveform of the scan signal is shifted by 1H otherwise.

The ON voltage on the display of the data signal Xm is set to either V4 or V5, and the OFF voltage to either V2 or V7. In the kth frame, V5 on the high-potential side is ON and V7 is OFF, to ensure that the largest potential difference with the reset voltage V1 is achieved. In other words, the phases of the waveforms of the scan and data signals are in a 180° shifted relationship. In the (k+1)th frame, in order to invert the polarity of the voltage applied to the liquid crystal, V4 on the low-potential side is ON and V2 is OFF, which ensures that the maximum potential difference with the reset voltage V8 is generated.

Consider a pixel PXL (m, n) driven by this difference signal Yn-Xm between scan signal Yn and the data signal Xm. Even if a large reset voltage (V1 - V7) or (V8 - V2) is applied thereto, the same ON voltage, OFF voltage, and bias voltage as those of the voltage-averaging method shown in Fig. 8 are obtained. In other words, if the relationships are set to be V4 - V3 = V3 - V2 = V7 - V6 = V6 - V5, the bias voltages of the nonselection periods T4 can be set to be applied equally. In this case, if it is desired to make the ON voltage large, the voltage differences between V1 and V2 and between V7 and V8 could be made large.

Similarly, if it is desired to make the reset voltage large, the potential difference between V4 and V5 can be made even wider. And if it is desired to make the delay period longer or shorter, the period can be shifted by unit 1H.

As a first example to illustrate this principle, the first group of voltages were set such that V1 = 0 V, V2 = 1 V, V3 = 2 V, and V4 = 3 V, and the second group were set such that V5 = 23 V, V6 = 24 V, V7 = 25 V, and V8 = 26 V. As a second example, the first group of voltages were set to be negative at V1 =-13 V, V2 = -12 V, V3 = -11 V, and V4 = -10, and the second group were set to be positive at V5 = 10 V, V6 = 11 V, V7 = 12 V, and V8 = 13 V. In both of the first and second examples, a reset voltage of ±25 V, an ON voltage of ±3 V, an OFF voltage of ±1 V, and a bias voltage of ±1 V were obtained. Note the way in which the voltage settings of the second example enable the simultaneous implementation of a large voltage of over 20 V and a small bias voltage in the region of 1 V, while keeping the voltage values close with each other and having axis of symmetry of the zero-potential, which is ideal from the point of view of turning the drive circuitry into an IC. In other words, this enables a circuit design that uses the symmetry of ±10 V, ±11 V, ±12 V, and ±13 V to facilitate the role of the power supply. If an even larger reset voltage is required of this embodiment, the voltages can be set further apart in the positive and negative directions, so as to make the potential difference between the voltage V4 of the first group and the voltage V5 of the second group even wider, so that a reset voltage of 30 V or 40 V with a bias voltage of 1 V can be implemented.

### Second Embodiment

The drive waveform of a second embodiment of the present invention that inverts the polarity of the voltage applied to the pixels in every frame, in the same manner as in the first embodiment, is shown in Fig. 10. The relationships between the voltages V1 to V8 in Fig. 10 are the same as those of the first embodiment. Scan signal Yn in Fig. 10 is at voltage V1 (frame k) or voltage V8 (frame k+1) during reset period T1, voltage V7 (frame k) or voltage V2 (frame k+1) during delay period T2, voltage V5 (frame k) or voltage V4 (frame k+1) during selection period T3, and the voltage V7 (frame k) or voltage V2 (frame k+1) during nonselection period T4. This scan signal Yn is symmetrical about an axis at an intermediate point between the voltages V4 and V5, and inverts every frame. In frame k, the ON voltage of the data signal Xm is V8 and the OFF voltage is V6; in frame k+1, the ON voltage is V1 and the OFF voltage is V3. If each of the voltages V1 to V8 is set to be the same as in the previously described first example or second example of the first embodiment, the reset voltage becomes ±26 V and the other voltage amplitudes can be expanded by ±1 V over those of the first embodiment. The ON voltage, OFF voltage, and bias voltage are the same as those of the first embodiment. To make this embodiment compatible with the voltage-averaging method of Fig. 8, the voltages could be set such that V2 - V1 = V3 - V2 = V7 - V6 = V8 - V7.

### Third Embodiment

The drive waveform of an third embodiment of the present invention that inverts the polarity of the voltage applied to the liquid crystal at each pulse is shown in Fig. 11. As can be seen from this figure, scan signal Yn is set to repeatedly alternate between two types of potential, voltages V1 and V8, every 1H/2 (where 1H is the length of selection period T3) during reset period T1. In a similar way, scan signal Yn is set to repeatedly alternate between two types of potential, voltages V3 and V6, every 1H/2 during delay period T2. However, note that from delay period T2 onward, the pulses are 180° out of phase in comparison with the reset pulses. Scan signal Yn is again set to repeatedly alternate between two types of potential, voltages V1 and V8, every 1H/2 during selection period T3. Finally, it is set to alternate repeatedly between two types of potential, voltages V3 and V6, every 1H/2 during nonselection period T4. Similarly, data signal Xm is set to repeatedly alternate between two types of potential, voltages V4 and V5, every 1H/2 as the ON voltage, and between two types of potential, voltages V2 and V7, every 1H/2 as the OFF voltage.

In the resultant difference signal Yn-Xm between scan signal Yn and data signal Xm, shown in Fig. 11, the polarities of the reset voltage, selection voltage, and nonselection voltage are inverted every 1H/2. As a result, the polarity of the voltage applied to the liquid crystal can be inverted once every line. With this third embodiment, the same ON voltage, OFF voltage, and bias voltage as those of the voltage-averaging method shown in Fig. 8 are obtained. In other words, if the relationships are set to be V4 - V3 = V3 - V2 = V7 - V6 = V6 - V5, the bias voltages of the nonselection periods T4 can be set to be applied equally.

### Fourth Embodiment

The drive waveform of a fourth embodiment that inverts the polarity of the voltage applied to the liquid crystal at each pulse, in the same manner as in the third embodiment, is shown in Fig. 12. Scan signal Yn in this figure differs from that of Fig. 11 in the potentials set during delay period T2, selection period T3, and nonselection period T4. Scan signal Yn shown in Fig. 12 is set to repeatedly alternate between two types of potential, voltages V2 and V7, every 1H/2 during delay period T2 and nonselection period T4. In a similar way, scan signal Yn is set to repeatedly alternate between two types of potential, voltages V4 and V5, every 1H/2 during selection period T3.

However, this data signal Xm is completely different from that of the third embodiment in that the ON voltage thereof has two types of potential, voltages V1 and V8, and the OFF voltage thereof also has two types of potential, voltages V3 and V6. The resultant difference signal Yn-Xm between scan signal Yn and data signal Xm is designed to apply voltages of the same absolute value as those of the difference signal of the third embodiment during delay period T2, selection period T3, and nonselection period T4. However, although the maximum amplitude of the difference signal Yn-Xm of the fourth embodiment is either V1 - V8 or V8 - V1 during reset period T1, in the same manner as in the second embodiment, the amplitude of the reset voltage can be made even larger than that of the third embodiment. Thus this drive method is superior to the drive method of the third embodiment. To make this embodiment compatible with the voltage-averaging method of Fig. 8, the voltages could be set such that V2 - V1 = V3 - V2 = V7-V6 = V8 - V7.

### Fifth Embodiment

A fifth embodiment of the present invention provides a method that controls the pulse drive frequency to reduce the number of inversions within one frame to approximately half that of the third embodiment. As shown in Fig. 13, a signal FR that determines the timing of the pulse inversions of the scan and data signals turns on and off in every 1H. The phase of this FR signal is shifted by 1H/2 from the rise of selection period T3. In this way, since the pulse inversion of the waveforms of scan signal Yn and the data signal Xm are in synchronization with signal FR, the number of pulse inversions within one frame is half that of the waveform shown in Fig. 11. However, the waveform of this difference signal Yn-Xm undergoes a pulse inversion every 1H/2, in the same manner as the third embodiment, and this can ensure a long lifetime for the liquid crystal. With this fifth embodiment, the drive frequency for each driver for the scan and data signals can be halved, making it easier to shape the waveform and reducing power consumption. This is particularly advantageous for the circuitry that causes the power supply voltage required for the alternation to swing between positive and negative. In the fifth embodiment, the voltage settings in each of the periods T1 to T4 of the scan and data signals were made the same as in the third embodiment, but they can equally well be the same as in the fourth embodiment.

### Sixth Embodiment

A drive method in which the pulse inversion is performed every 1H is shown in Fig. 14. As can be seen from this figure, the FR signal is similar to that of the fifth embodiment shown in Fig. 13 in that it turns on and off every 1H, but differs from the fifth embodiment in that this FR signal is in synchronism with selection period T3. As shown in Fig. 14, during each selection period T3, scan signal Yn is set to voltage V1 in frame k and voltage V8 in frame (k+1), and thus the voltages V1 and V8 alternate every frame. When the voltage of scan signal Yn in selection period T3 is V1, the waveform of the data signal Xm has voltage V4 as the ON voltage and voltage V2 as the OFF voltage. Similarly, when the voltage of scan signal Yn in selection period T3 is V8, the waveform of the data signal Xm has voltage V5 as the ON voltage and voltage V7 as the OFF voltage. If the resultant difference signal Yn-Xm between the scan and data signals is observed in frame k, it is clear that a voltage of negative polarity is applied to the liquid crystal a large number of times, and thus the polarity of the voltages applied to each pixel within any one frame cannot be balanced. However, in the next frame (k+1), the number of times a voltage of a positive polarity is applied to the liquid crystal is increased, so that the polarity of the voltages applied to the liquid crystal can be balanced over a sequence of two frames. This means that the sixth embodiment combines the frame inversion of the first and second embodiments with the pulse inversion of the third and fourth embodiments. The advantage of this sixth embodiment lies in the way in which selection period T3 (1H) can be lengthened even when driving a liquid crystal display apparatus with high duty ratio, so that the length of time that the direct-current portion of the voltage is applied to the liquid crystal can be set to be shorter than in embodiments that employ frame inversion alone. The voltage of each of the periods T1 to T4 of the scan and data signals of this sixth embodiment are set to be the same as those in the second embodiment, but they can be set to be the same as those in the third embodiment instead.

### Seventh Embodiment

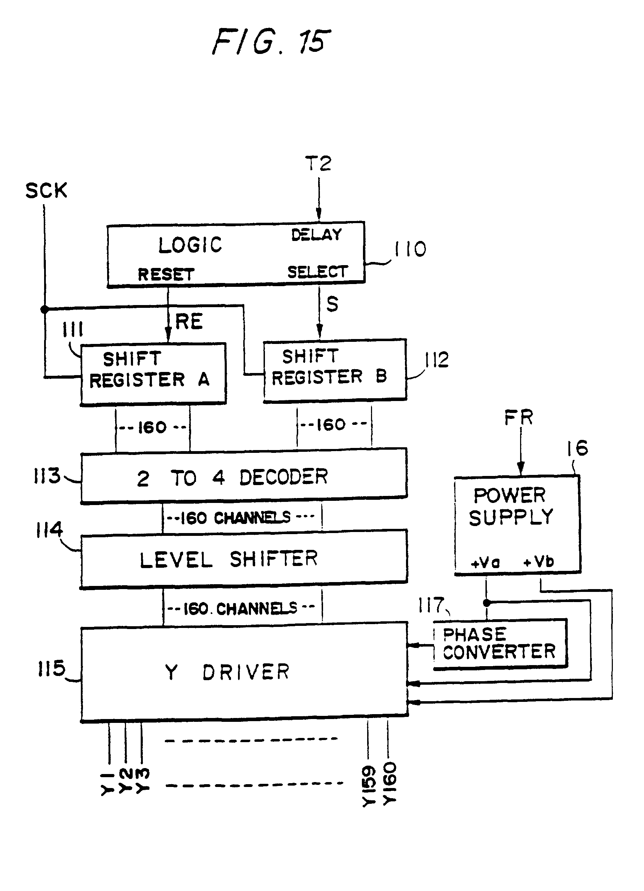

A block diagram of a drive circuit for scan signal electrodes (row electrodes), for implementing the drive methods of the first to the sixth embodiments, is shown in Fig. 15. The description below concerns the circuit that generates the drive waveform of the sixth embodiment. In Fig. 15, a logic circuit 110 generates a reset signal RE that specifies reset period T1 and a select signal S that specifies selection period T3 after delay period T2 has elapsed after reset period T1, based on information on delay period T2. Signals RE and S are input to shift registers 111 and 112, respectively. Each of these registers 111 and 112 transfer signals RE and S in accordance with a shift clock SCK, and at the same time the internal states of the registers are simultaneously output in parallel to 160 channels. A 2-to-4 decoder 113 identifies three register output states of signals RE and S as (RE, S) = (1, 0), (0, 1), or (0, 0), and outputs them through a level shifter 114 to a Y driver 115. Y driver 115 receives three voltages from a power supply circuit 116 and a phase converter 117. If the power supply voltage of power supply circuit 116 acts as the alternation signal FR, each of the voltages can be made to swing ±Va or ±Vb. In this case, if (RE, S) is (1, 0), the voltages are ±Va; if it is (0,1), the voltages are the inversion of ±Va after being passed through the phase converter 117; and if it is (0, 0), the voltages ±Vb are selected. For example, settings of Va = V8, -Va = V1, Vb = V6, and -Vb = V3 enable the provision of scan signal Yn waveform of the drive waveforms of the sixth embodiment shown in Fig. 14.

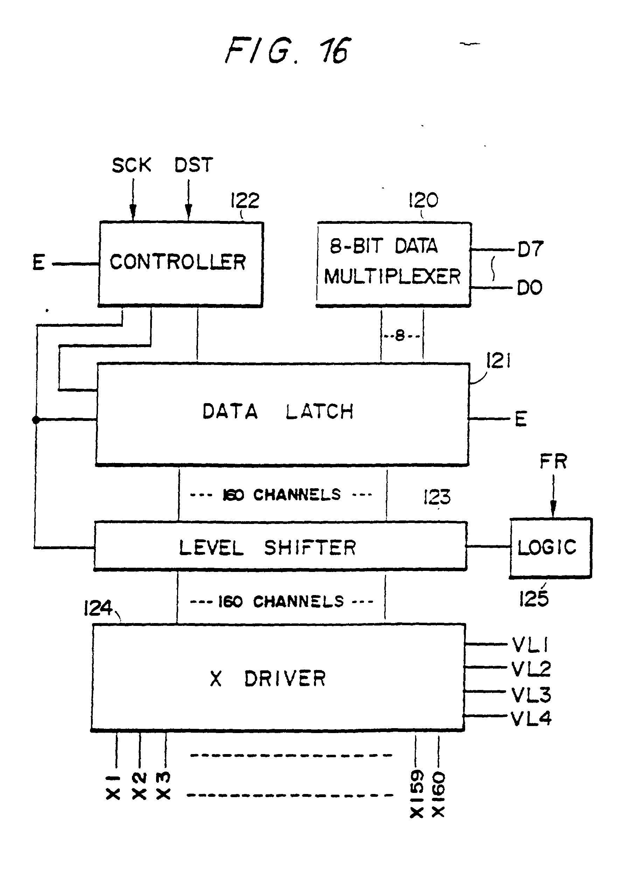

A block diagram of the drive circuit for the data signal electrodes (column electrodes) is shown in Fig. 16. In this figure, 8-bit image data D0 to D7 is input to a data latch circuit 121 through a multiplexer 120, and it is converted into 160 channels of parallel data in the data latch circuit 121. The latch timing of the data latch circuit 121 is determined by latch pulses output by a control circuit 122 to which the clock SCK is input. The 160 channels of image data are sent from data latch circuit 121 to a level shifter 123, and at the same time an inversion operation is added by a signal from a logic circuit 125, based on the alternation signal FR. Therefore, two positive and negative states caused by the alternation are superimposed on the two ON/OFF states of the data signal, to generate a total of four states. An X driver 124 to which these four states for each of the channels are input selects one level from power supply voltages VL1 to VL4 in accordance with the state of each channel, and outputs it. In this case, if VL1 = V7, VL2 = V2, VL3 = V5, and VL = V4, a waveform that is the same as data signal Xm of Fig. 14, which shows the drive waveform of the sixth embodiment, can be generated.

The above description has dealt with the generation of scan signal Yn and the data signal Xm of the sixth embodiment as the scan and data signal waveforms generated by the drive circuits shown in Figs. 15-16, but it is equally possible to generate any of the drive waveforms of the first to fifth embodiments, by changing the period of the FR signal and the setting voltages corresponding to ±Va, ±Vb, and VL1 to VL4.

### Eighth Embodiment

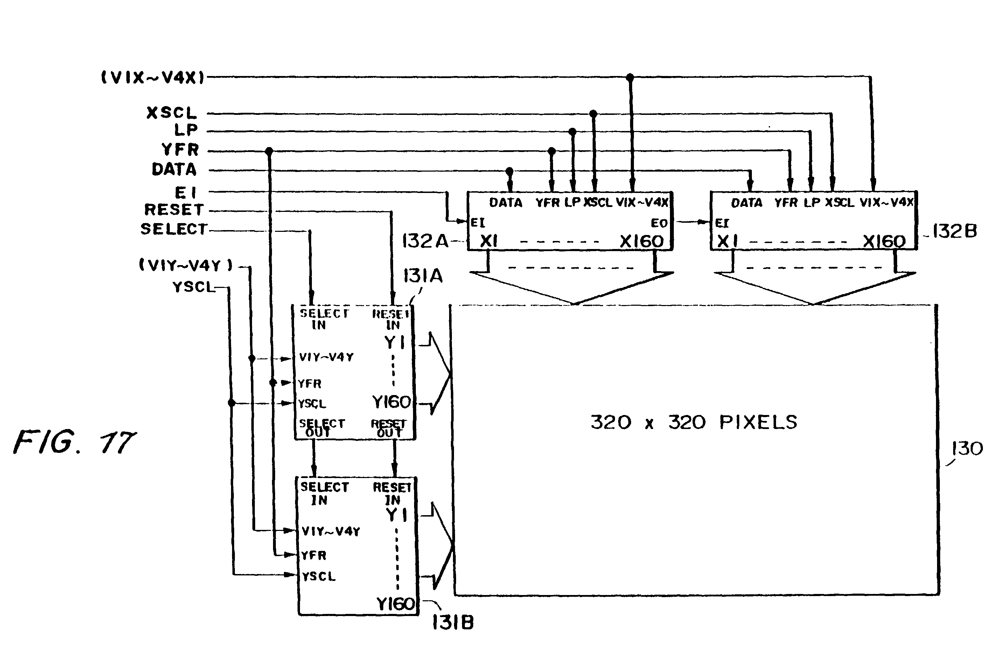

Drive circuitry that uses logic means to switch the voltage within each of the periods T1 to T4 of the scan signal and also the voltage of each selection period of the data signal will now be described with reference to Figs. 17-22.

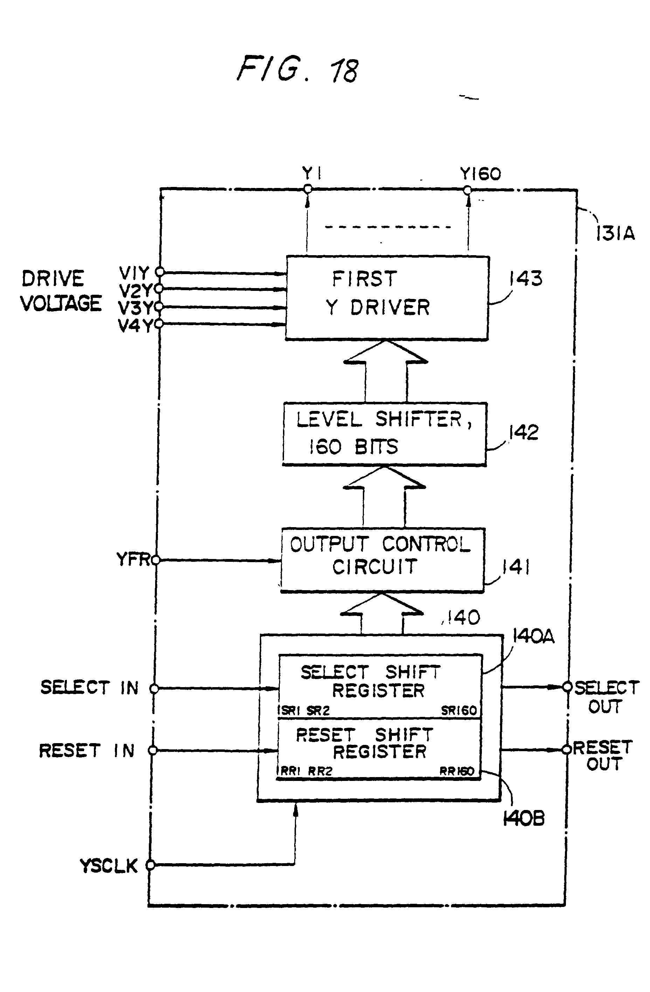

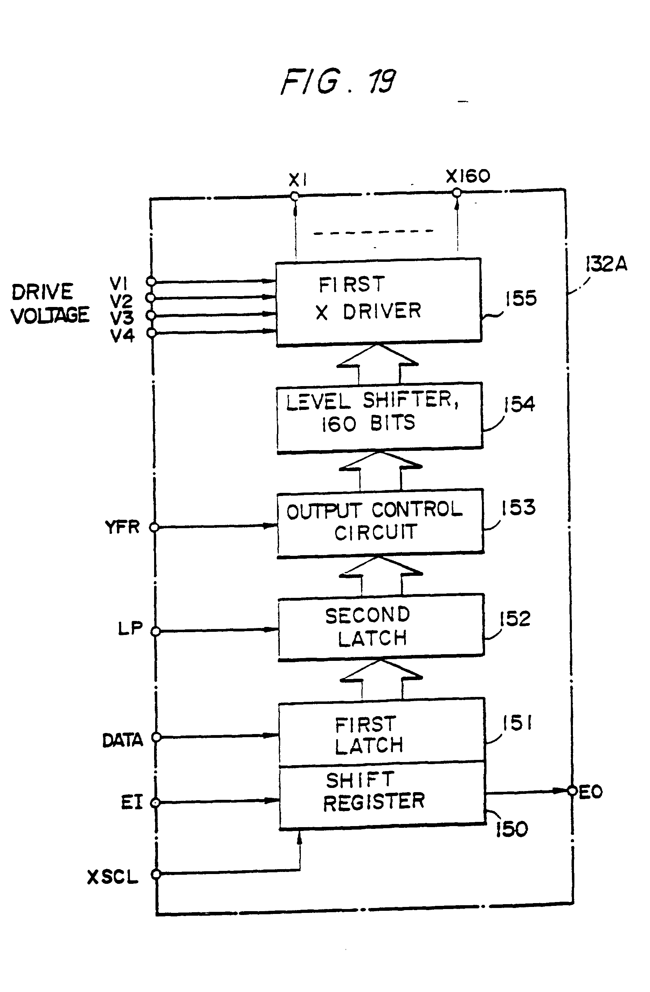

A block diagram of the entire configuration, including the liquid crystal panel and its drive circuitry, is shown in Fig. 17. A liquid crystal panel 130 has a 320 x 320-pixel structure, and first and second Y driver circuits 131A and 131B and first and second X drivers 132A and 132B are provided in order to drive this liquid crystal panel 130. First and second Y driver circuits 131A and 131B each have the same configuration, which is shown in Fig. 18. Similarly, X driver circuits 132A and 132B have the same configuration, which is shown in Fig. 19.

Referring to Fig. 18, Y driver circuit 131A has a shift register 140 that comprises a select shift register 140A and a reset shift register 140B. Select shift register 140A has registers SR1 to SR160 and reset shift register 140B has registers RR1 to RR160. Select signal S, that specifies selection period T3, is input to select shift register 140A and is sequentially shifted by shift clock YSCL in the next-stage register. The contents of register SR160 are output from a select out pin, enabling a cascade connection with second Y driver circuit 131B. Reset signal RE, which specifies reset period T1, is input to reset shift register 140B and is sequentially shifted by shift clock YSCL in the next-stage shift register. The contents of register RR160 are output through the reset out pin, enabling a cascade connection with second Y driver circuit 131B.

All 160 channels of the contents of each of shift registers 140A and 140B are input to output control circuit 141. Output control circuit 141 identifies six states based on the input states of the reset signal RE, select signal S, and alternation signal FR as (RE, S, FR) = (0, 0, 0), (0, 0, 1), (0, 1, 0), (0, 1, 1), (1, 0, 0), or (1, 0, 1), and outputs corresponding signals, and these signals are input to a Y driver 143 through a level shifter 142. Four types of drive voltage (V1Y, V2Y, V3Y, and V4Y) are input to Y driver 143, and one drive voltage is output to each of the channels in accordance with the logical chart of Table 7, based on the six states identified and output by output control circuit 141.

**Table 7**

| Logical Values for Y Driver Output | | | |
|---|---|---|---|
| Reset | Select | Y FR | Y OUT |
| L | L | L | V4Y |
| L | L | H | V3Y |
| L | H | L | V2Y |
| L | H | H | V1Y |
| H | L | L | V1Y |
| H | L | H | V2Y |
| H | H | * | * |

| | | | |
|---|---|---|---|
| (L: Low; H: High; *: Don't care) | | | |

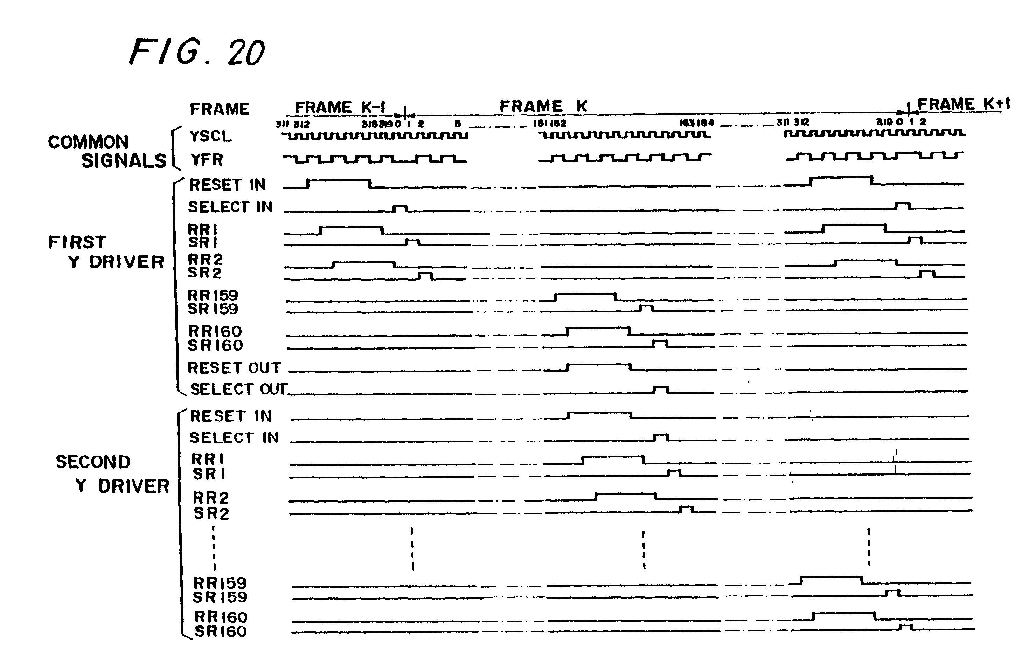

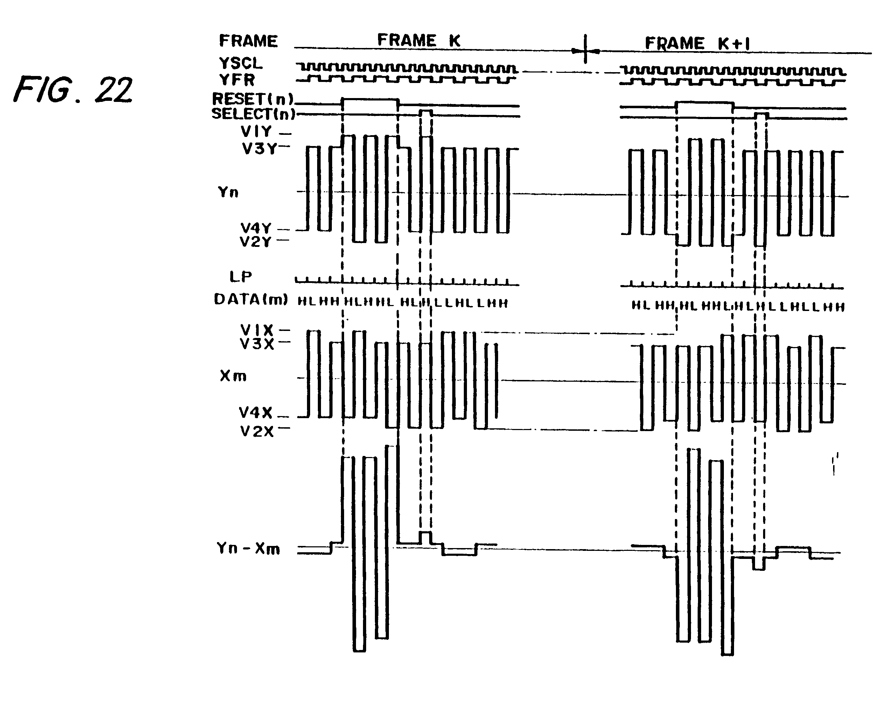

The states of the input and output signals to and from the various components of first and second Y driver circuits 131A and 131B are shown in Fig. 20. As can be seen in Fig 20, if the length of selection period T3 is taken to be 1H, a signal YFR is repeatedly fumed on and off every 1H and the polarity of the voltage applied to the liquid crystal inverts every 1H. Since each row has 320 pixels, the duty ratio is 1/320, and reset period T1 is set to 5H and delay period T2 to 2H. The signal waveform of the nth scan signal Yn output by the operation of this drive circuit is shown in Fig. 22.

First X driver circuit 132A is described with reference to Fig. 19. First X driver circuit 132A has a shift register 150 that has 160 registers, and data is sequentially shifted in a next-stage register in accordance with an input signal El and a shift clock XSCL. The contents of the 160th register are output to the outside through an EO pin, enabling a cascade connection with second X driver circuit 132B.

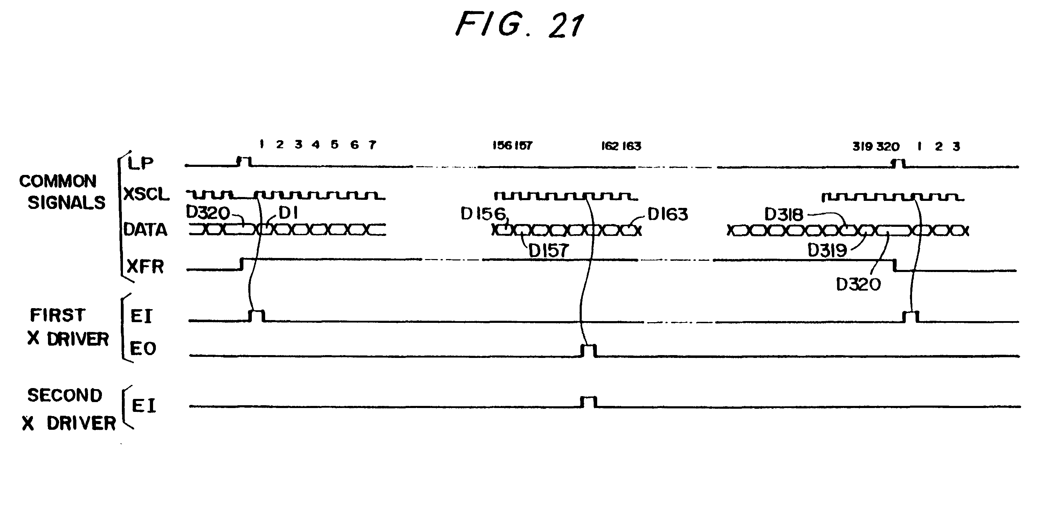

Signal El input to shift register 150 is at a logical one once every period 1H, as shown in Fig. 21. Therefore, a logical one is output in sequence from each register of shift register 150, and this causes a first latch circuit 151 to latch image data at addresses corresponding to its registers. The 160 channels of data of first latch circuit 151 is latched in a second latch circuit 152 at the timing at which a latch pulse LP is input. An output control circuit 153 that receives alternation signal YFR and data D from second latch circuit 152 identifies four states as (D, YFR) = (0, 0), (0, 1), (1, 0), or (1, 1) according to data D and the input state of alternation signal YFR, and corresponding signals are input channel-by-channel through a level shifter 154 to an X driver 155. X driver 155 receives four types of drive voltage V1X, V2X, V3X, and V4X, and outputs one of the four types of drive voltage to each channel in accordance with the logical chart of Table 8, based on information from output control circuit 153.

**Table 8**

| Logical Values for Y Driver Output | | |
|---|---|---|
| Data | Y FR | X OUT |
| L | L | V2X |
| L | H | V1X |
| H | L | V4X |
| H | H | V3X |
| (L: Low; H: High) | | |

Data signal Xm for the mth column, in the data signal output channel-by-channel by X driver 155, is shown in Fig. 22 along with difference signal Yn-Xm between scan signal Yn and data signal Xm. This difference signal inverts the voltage applied to the liquid crystal every 1H, in the same manner as in the difference signal of Fig. 14 which shows the drive waveforms of the sixth embodiment. Since the voltage applied to the liquid crystal within one frame cannot be balanced between positive and negative, a balance between positive and negative in the voltage applied to the liquid crystal is achieved in the (k+1)th frame subsequent to the kth frame. This means that the difference signal shown in Fig. 22 combines a polarity inversion every 1 H and a polarity inversion every frame, as in the sixth embodiment.

Thus the eighth embodiment is more advantageous than the seventh embodiment from a circuit configuration viewpoint, in that switching of the voltages of each of the scan and data signals is performed by logic means.

### Ninth Embodiment

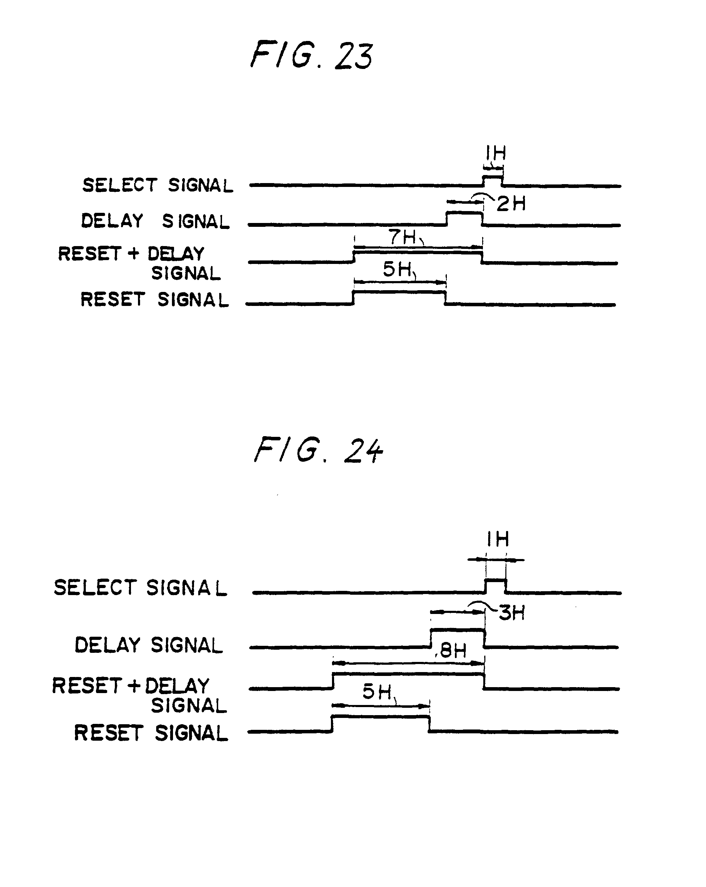

A drive method that enables modification of delay period T2 within the signal, using the drive circuit shown for the eighth embodiment, is described with reference to Figs. 23-24. The means of changing delay period T2 must not only change the delay period without affecting the specified position of selection period T3 within one frame T, it must also change reset period T1 before delay period T2. As shown in Fig. 23, if reset period T1 is set to 5H and delay period T2 to 2H, a combination reset plus delay signal having a pulse width that is the sum of the pulse widths of reset period T1 and delay period T2 (7H) is generated before selection period T3. The reset signal input to reset shift register 140B of Y driver circuits 131A and 131B can be shaped by an exclusive OR of this reset plus delay signal and the delay signal that specifies the delay period.

In this case, if it becomes necessary to change delay period T2 to compensate for irregularities of the threshold value of the liquid crystal at individual pixels making up the liquid crystal panel, or for variations in the threshold value of the liquid crystal caused by ambient temperature, the specifications of delay period T2 and reset period T1 before it can be changed by the above means. In other words, if it is required to change the length of delay period T2, which is 2H in Fig. 23, to 3H as shown in Fig. 24, delay period T2 could be changed and simultaneously the pulse width of the reset plus delay signal could be changed to 5H + 3H = 8H. A reset signal having the same 5H reset period T1 of Fig. 23 could be shaped by an exclusive OR of the thus modified delay signal and the reset plus delay signal. Similarly, if it is required to change delay period T2 to 3H and reset period T1 to 7H, the reset plus delay signal could be changed to a signal having a pulse width of 7H + 3H = 10H, as shown in Fig. 25.

While the invention has been described in conjunction with several specific embodiments, it is evident to those skilled in the art that many further alternatives, modifications and variations will be apparent in light of the foregoing description. Thus, the invention described herein is intended to embrace all such alternatives, modifications, applications and variations as may fall within the spirit and scope of the subjoined claims.

### APPLICATION OF THE PRESENT INVENTION

It should be noted that the method of the present invention to be described in the foregoing embodiments is suitable for driving a liquid crystal display device such as a TV, the display of a personal computer, a projector, a head mounted display, the viewfinder of a video camera, or a printer having a liquid crystal shutter.

## Claims

1. A method of driving a liquid crystal display device wherein said liquid crystal display device comprises:
a chiral nematic liquid crystal medium wherein liquid crystal molecules interposed between two substrates have a predetermined angle of twist in an initial state and said chiral nematic liquid crystal medium has two metastable states differing from said initial state as relaxation states achieved after a voltage that brings about a Frederick's transition has been applied in said initial state;
a plurality of row electrodes formed on one of said substrates, each being supplied with a row electrode signal; and
a plurality of column electrodes formed on the other of said substrates, each being supplied with a column electrode signal; wherein intersections between said row electrodes and said column electrodes form pixels and the voltage of a difference signal between said row electrode signal and said column electrode signal is applied to said liquid crystal corresponding to each of said pixels to drive said pixels;
said method being **characterized in** using at least eight potential levels to drive said liquid crystal and comprising the steps of:
a) including within one frame of said difference signal a selection period that is set to be shifted for each of said row electrodes, a nonselection period following thereafter, and a reset period set before said selection period;
b) setting said column electrode signal to data potentials that include a potential that is either an ON potential or an OFF potential for each occurrence of said selection period corresponding to each of said pixels on the same column electrode, and setting four types of potential for applying positive and negative ON selection voltages and positive and negative OFF selection voltages to said liquid crystal, as said data potentials of said column electrode signal;
c) setting said row electrode signal to a reset potential during said reset period, a selection potential during said selection period, and a nonselection potential during a nonselection period, said reset potential being two types of potential for applying positive and negative reset voltages to said liquid crystal during said reset period, said selection potential being two types of potential for applying positive and negative selection voltages to said liquid crystal during said selection period, and said nonselection potential being two types of potential for imposing a bias potential on said four types of data potential during said nonselection period; and
d) setting either two types of said selection potential or two potentials among said four types of said data potential to be the same as said two types of said reset potential.

2. The method of Claim 1, including the steps of:
dividing said eight potential levels into two groups such that four levels are in a first, low-voltage group (V1, V2, V3, and V4, where: V1 < V2 < V3 < V4) and four levels are in a second, high-voltage group (V5, V6, V7, and V8, where: V4 < V5 < V6 < V7 < V8);
selecting said reset potential from amongst said second group when said data potential of said column electrode signal lies within said first group, or from amongst said first group when said data potential of said column electrode signal lies within said second group; and
in said periods other than said reset period, selecting one potential each from the same first group when said data potential of said column electrode signal is within said first group, or selecting one potential each from the same second group when said data potential of said column electrode signal is within said second group.

3. The method of Claim 2, including the step of:
setting the potential difference between said potential V4 of said first group and said potential V5 of said second group to be large, and setting the absolute value of said reset voltage applied to said liquid crystal in said reset period to be large.

4. The method of Claim 2 or 3, including the steps of:
in a kth frame (where k is an integer), setting an ON selection potential of said column electrode signal to V5 of said second group and an OFF selection potential to V7; and setting said reset potential of said row electrode signal to V1, said selection potential to V8, and said nonselection potential to V6; and
in a subsequent (k+1)th frame, setting said ON selection potential of said column electrode signal to V4 of said first group and said OFF selection potential to V2; and setting said reset potential of said row electrode signal to V8, said selection potential to V1, and said nonselection potential to V3; whereby said liquid crystal is driven in an alternating manner by a polarity inversion every frame.

5. The method of Claim 2 or 3, including the steps of:
in a kth frame (where k is an integer), setting an ON selection potential of said column electrode signal to V8 of said second group and an OFF selection potential to V6; and setting said reset potential of said row electrode signal to V1, said selection potential to V5, and said nonselection potential to V7; and
in a subsequent (k+1)th frame, setting said ON selection potential of said column electrode signal to V1 of said first group and said OFF selection potential to V3; and setting said reset potential of said row electrode signal to V8, said selection potential to V4, and said nonselection potential to V2; whereby said liquid crystal is driven in an alternating manner by a polarity inversion every frame.

6. The method of Claim 2 or 3 further comprising the steps of:
setting, within the period of one frame, an ON selection potential of said column electrode signal by alternating pulses of V4 and V5;
setting, within the period of one frame, an OFF selection potential of said column electrode signal by alternating pulses of V2 and V7; and
in a sequence corresponding thereto, said reset potential of said row electrode signal is set by alternating pulses of V8 and V1, said selection potential is set by alternating pulses of V1 and V8, and said nonselection potential is set by alternating pulses of V3 and V6, whereby the polarity of each voltage applied to said liquid crystal is inverted at each pulse.

7. The method of Claim 4 or 6 wherein:
said voltages are set to be in the relationship: V4 - V3 = V3 - V2 = V7 - V6 = V6 - V5.

8. The method of Claim 2 or 3 further comprising the steps of:
setting, within the period of one frame, an ON selection potential of said column electrode signal by alternating pulses of V1 and V8;
setting, within the period of one frame, an OFF selection potential of said column electrode signal by alternating pulses of V3 and V6; and
in a sequence corresponding thereto, said reset potential of said row electrode signal is set by alternating pulses of V8 and V1, said selection potential is set by alternating pulses of V4 and V5, and said nonselection potential is set by alternating pulses of V2 and V7, whereby the polarity of each voltage applied to said liquid crystal is inverted at each pulse.

9. The method of Claim 5 or 8 wherein said voltages are set to be in the relationship: V3 - V2 = V2-V1 = V8 - V7 = V7 - V6.

10. The method of Claim 6 or 8 wherein when a unit time equivalent to said selection period is termed 1H, the pulse width of a signal FR that causes said row electrode signal and column electrode signal to alternate is 1H, and the phase of said signal FR is set to be shifted by (1H/2) with respect to the selection period of said row electrode signal Yn.

11. The method of Claim 6 or 8, including the step of:
driving said liquid crystal in an alternating manner by a combination of a polarity inversion every unit time (1H) equivalent to said selection period and a polarity inversion every frame, such that the polarity of a voltage applied to said liquid crystal is inverted every 1H, and, when said polarity at the start of a kth frame (where k is an integer) is positive the polarity at the start of the (k+1)th frame is made negative, when said polarity at the start of a kth frame (where k is an integer) is negative the polarity at the start of the (k+1)th frame is made positive.

12. The method of any one of Claims 2 to 11, including the step of:
setting said first group of voltages and second group of voltages to be symmetrical in the positive and negative directions with respect to a center of the ground-level potential.

## Patentansprüche

1. Verfahren zum Ansteuern einer Flüssigkristallanzeigevorrichtung, bei der die Flüssigkristallanzeigevorrichtung umfaßt:
ein chirales, nematisches Flüssigkristallmedium, bei dem zwischen zwei Substraten befindliche Flüssigkristallmoleküle in einem Anfangszustand einen vorherbestimmten Verdrillungswinkel haben und das chirale, nematische Flüssigkristallmedium zwei sich von dem Anfangszustand unterscheidende metastabile Zustände als Relaxationszustände hat, die erreicht werden, nachdem eine einen Frederick's-Übergang verursachende Spannung im Anfangszustand angelegt worden ist,
eine Mehrzahl von Zeilenelektroden, die auf einem der Substrate ausgebildet sind und jeweils mit einem Zeilenelektrodensignal versorgt werden, und
eine Mehrzahl von Spaltenelektroden, die auf dem anderen der Substrate ausgebildet sind und jeweils mit einem Spaltenelektrodensignal versorgt werden,
wobei Kreuzungspunkte zwischen den Zeilen- und den Spaltenelektroden Pixel bilden und die Spannung eines Differenzsignals zwischen dem Zeilenelektrodensignal und dem Spaltenelektrodensignal an den Flüssigkristall entsprechend den jeweiligen Pixels angelegt wird, um die Pixel anzusteuern,
wobei des Verfahren **dadurch gekennzeichnet ist, daß** wenigstens acht Potentialpegel zum Ansteuern des Flüssigkristalls eingesetzt werden und das Verfahren die Schritte umfaßt:
a) Einschließen, innerhalb eines Rahmens des Differenzsignals, einer Selektionsperiode, die so eingestellt wird, daß sie für die einzelnen Zeilenelektroden verschoben ist, einer darauf folgenden Nichtselektionsperiode und einer vor die Selektionsperiode gesetzten Rücksetzperiode,
b) Einstellen des Spaltenelektrodensignals auf Datenpotentiale, die ein Potential umfassen, das entweder ein Ein-Potential oder ein Aus-Potential für jedes Auftreten der Selektionsperiode entsprechend den einzelnen Pixeln derselben Spaltenelektrode ist, und Einstellen von vier Potentialarten zum Anlegen positiver und negativer Ein-Selektionsspannungen und positiver und negativer Aus-Selektionsspannungen an den Flüssigkristall als die Datenpotentiale des Spaltenelektrodensignals;
c) Einstellen des Zeilenelektrodensignals auf ein Rücksetzpotential während der Rücksetzperiode, ein Selektionspotential während der Selektionsperiode und ein Nicht-Selektionspotential während der Nichtselektionsperiode, wobei das Rücksetzpotential zwei Potentialarten zum Anlegen positiver und negativer Rücksetzspannungen an den Flüssigkristall während der Rücksetzperiode umfaßt, das Selektionspotential zwei Potentialarten zum Anlegen positiver und negativer Selektionsspannungen an den Flüssigkristall während der Selektionsperiode umfaßt und das Nicht-Selektionspotential zwei Potentialarten zum Aufbringen eines Vorspannungspotential für die vier Arten von Datenpotentialen während der Nichtselektionsperiode umfaßt; und
d) Einstellen von entweder zwei Arten des Selektionspotentials oder von zwei Potentialen unter den vier Arten des Datenpotentials derart, daß sie gleich den beiden Arten des Rücksetzpotentials sind.

2. Verfahren nach Anspruch 1, umfassend die Schritte:
Unterteilen der acht Potentialpegel in zwei Gruppen derart, daß vier Pegel sich in einer ersten Niedrigspannungsgruppe V1, V2, V3 und V4 befinden, wobei V1 <V2<V3<V4, und vier Pegel sich in einer zweiten Hochspannungsgruppe V5, V6, V7 und V8 befinden, wobei V4<V5<V6<V7<V8;
Auswählen des Rücksetzpotentials aus der zweiten Gruppe, wenn das Datenpotential des Spaltenelektrodensignals innerhalb der ersten Gruppe liegt, oder aus der ersten Gruppe, wenn das Datenpotential des Spaltenelektrodensignals innerhalb der zweiten Gruppe liegt; und
in anderen Perioden als der Rücksetzperiode, Auswählen eines Potentials jeweils aus der ersten Gruppe wenn sich das Datenpotential des Spaltenelektrodensignals innerhalb der ersten Gruppe befindet, oder Auswählen eines Potentials jeweils aus der zweiten Gruppe, wenn sich das Datenpotential des Spaltenelektrodensignals innerhalb der zweiten Gruppe befindet.

3. Verfahren nach Anspruch 2, umfassend den Schritt:
Einstellen der Potentialdifferenz zwischen dem Potential V4 der ersten Gruppe und dem Potential V5 der zweiten Gruppe derart, daß sie groß ist, und Einstellen des Absolutwerts der Rücksetzspannung, die an den Flüssigkristall in der Rücksetzperiode angelegt wird, derart, daß er groß ist.

4. Verfahren nach Anspruch 2 oder 3, umfassend die Schritte:
in einem k-ten Rahmen, wobei k eine ganze Zahl ist, Einstellen eines Ein-Selektionspotentials des Spaltenelektrodensignals auf V5 der zweiten Gruppe und eines Aus-Selektionssignals auf V7; und Einstellen des Rücksetzpotentials des Zeilenelektrodensignals auf V1, des Selektionspotentials auf V8 und des Nichtselektionspotentials auf V6; und
in einem nachfolgenden (k + 1)-ten Rahmen, Einstellen des Ein-Selektionspotentials des Spaltenelektrodensignals auf V4 der ersten Gruppe und des Aus-Selektionspotentials auf V2; und Einstellen des Rücksetzpotentials des Zeilenelektrodensignals auf V8, des Selektionspotentials auf V1 und des Nichtselektionspotentials auf V3; wodurch der Flüssigkristall durch eine Polaritätsumkehr mit jedem Rahmen in wechselnder Weise angesteuert wird.

5. Verfahren nach Anspruch 2 oder 3, umfassend die Schritte:
in einem k-ten Rahmen (wobei k eine ganze Zahl ist), Einstellen eines Ein-Selektionspotentials des Spaltenelektrodensignals auf V8 der zweiten Gruppe und eines Aus-Selektionspotentials auf V6; und Einstellen des Rücksetzpotentials des Zeilenelektrodensignals auf V1, des Selektionspotentials auf V5 und des Nichtselektionspotentials auf V7; und
in einem nachfolgenden (k + 1)-ten Rahmen, Einstellen des Ein-Selektionspotentials des Spaltenelektrodensignals auf V1 der ersten Gruppe und des Aus-Selektionspotentials auf V3; und Einstellen des Rücksetzpotentials des Zeilenelektrodensignals auf V8, des Selektionspotentials auf V4 und des Nichtselektionspotentials auf V2; wodurch der Flüssigkristall durch eine Polaritätsumkehr mit jedem Rahmen in wechselnder Weise angesteuert wird.

6. Verfahren nach Anspruch 2 oder 3, ferner umfassend die Schritte:
Einstellen, innerhalb der Periode eines Rahmens, eines Ein-Selektionspotentials des Spaltenelektrodensignals durch alternierende Impulse von V4 und V5,
Einstellen, innerhalb der Periode eines Rahmens, eines Aus-Selektionspotentials des Spaltenelektrodensignals durch alternierende Impulse von V2 und V7; und
in dem entsprechender Folge, Einstellen des Rücksetzpotentials des Zeilenelektrodensignals durch alternierende Impulse von V8 und V1, des Selektionspotentials durch alternierende Impulse von V1 und V8 und des Nichtselektionspotentials durch alternierende Impulse von V3 und V6, wodurch die Polarität der einzelnen an den Flüssigkristall angelegten Spannungen mit jedem Impuls umgekehrt wird.

7. Verfahren nach Anspruch 4 oder 6, bei dem die Spannungen so eingestellt sind, daß sie der Beziehung V4 - V3 = V3 - V2 = V7 - V6 = V6 - V5 genügen.

8. Verfahren nach Anspruch 2 oder 3, ferner umfassend die Schritte:
Einstellen, innerhalb der Periode eines Rahmens, eines Ein-Selektionspotentials des Spaltenelektrodensignals durch alternierende Impulse von V1 und V8;
Einstellen, innerhalb der Periode eines Rahmens, eines Aus-Selektionspotentials des Spaltenelektrodensignals durch alternierende Impulse von V3 und V6; und
in dem entsprechender Folge, Einstellen des Rücksetzpotentials des Zeilenelektrodensignals durch alternierende Impulse von V8 und V1, des Selektionspotentials durch altemierende Impulse von V4 und V5, und des Nichtselektionspotentials durch alternierende Impulse von V2 und V7, wodurch die Polarität der einzelnen an den Flüssigkristall angelegten Spannungen mit jedem Impuls umgekehrt wird.

9. Verfahren nach Anspruch 5 oder 8, bei dem die Spannungen so eingestellt werden, daß sie die Beziehung V3 - V2 = V2 - V1 = V8 - V7 = V7 - V6 erfüllen.

10. Verfahren nach Anspruch 6 oder 8, bei dem, wenn eine Zeiteinheit äquivalent der Selektionsperiode mit 1H bezeichnet wird, die Impulsbreite eines Signals FR, das bewirkt, daß das Zeilenelektrodensignal und das Spaltenelektrodensignal alternieren, 1H beträgt und die Phase des Signals FR so eingestellt wird, daß sie um (1H/2) bezüglich der Selektionsperiode des Zeilenelektrodensignals Yn versetzt ist.

11. Verfahren nach Anspruch 6 oder 8, umfassend den Schritt:
Ansteuern des Flüssigkristalls in alternierender Weise durch eine Kombination einer Polaritätsumkehr mit jeder Zeiteinheit (1/H) äquivalent der Selektionsperiode und einer Polaritätsumkehr mit jedem Rahmen derart, daß die Polarität einer an den Flüssigkristall angelegten Spannung alle 1H umgekehrt wird und, wenn die Polarität zu Beginn eines k-ten Rahmens, wobei k eine ganze Zahl ist, positiv ist, die Polarität zu Beginn des (k + 1)ten Rahmens negativ gemacht wird und, wenn die Polarität zu Beginn des k-ten Rahmens (wobei k eine ganze Zahl ist) negativ ist, die Polarität zu Beginn des (k + 1)ten Rahmens positiv gemacht wird.

12. Verfahren nach einem der Ansprüche 2 bis 11, umfassend den Schritt:
Einstellen der ersten Gruppe von Spannungen und der zweiten Gruppe von Spannungen derart, daß sie in positiver und negativer Richtung bezüglich einer Mitte des Erdpegelpotentials symmetrisch sind.

## Revendications

1. Procédé d'attaque d'un dispositif d'affichage à cristal liquide dans lequel le dispositif d'affichage à cristal liquide comprend :
un milieu de cristal liquide nématique chiral dans lequel des molécules de cristal liquide interposées entre deux substrats ont un angle de torsion déterminé à l'avance en un état initial et le milieu à cristal liquide nématique chiral a deux états métastables différents de l'état initial en tant qu'états de relaxation obtenus après qu'une tension qui provoque une transition de Freedericksz a été appliquée dans l'état initial ;
une pluralité d'électrodes de lignes formées sur l'un des substrats, chacune étant alimentée en un signal d'électrode de ligne ; et
une pluralité d'électrodes de colonnes formées sur l'autre substrat, chacune étant alimentée en un signal d'électrode de colonne ;
les intersections entre les électrodes de lignes et les électrodes de colonnes formant des pixels et la tension d'un signal de différence entre le signal d'électrode de lignes et le signal d'électrode de colonne étant appliquée au cristal liquide correspondant à chacun des pixels pour attaquer ces pixels ;
le procédé étant **caractérisé en ce qu'**il utilise au moins huit niveaux de potentiels pour attaquer le cristal liquide et en ce qu'il comprend les stades de:
a) inclusion dans une trame du signal de différence d'une période de sélection qui est fixée de manière à se décaler pour chacune des électrodes de lignes suivie d'une période de non-sélection et d'une période de remise à zéro après la période de sélection ;
b) réglage du signal d'électrode de colonne à des potentiels de données qui englobent un potentiel qui est, soit un potentiel de marche, soit un potentiel d'arrêt pour chaque apparition de la période de sélection correspondant à chacun des pixels sur la même électrode de colonne et réglage de quatre types de potentiels pour appliquer des tensions de sélection de marche positive et négative et des tensions de sélection d'arrêt positive et négative au cristal liquide en tant que potentiels de donnée du signal d'électrode de colonne ;
c) réglage du signal d'électrode de ligne à un potentiel de remise à zéro pendant la période de remise à zéro, à un potentiel de sélection pendant la période de sélection et à un potentiel de non-sélection pendant une période de non-sélection, le potentiel de remise à zéro étant deux types de potentiel pour appliquer des tensions de remise à zéro positive et négative au cristal liquide pendant la période de remise à zéro, le potentiel de sélection étant deux types de potentiel pour appliquer des tensions de sélection positive et négative au cristal liquide pendant la période de la sélection et le potentiel de non-sélection étant deux types de potentiel pour imposer un potentiel polarisé aux quatre types de potentiel de données pendant la période de non-sélection ; et
d) réglage de deux types du potentiel de sélection ou de deux potentiels parmi les quatre types du potentiel de donnée pour qu'ils soient les mêmes que les deux types du potentiel de remise à zéro.

2. Procédé suivant la revendication 1, comprenant les stades de :
division des huit niveaux de potentiel en deux groupes tels que quatre groupes sont dans un premier groupe V1, V2, V3 et V4 à basse tension, dans lequel V1 < V2 < V3 < V4 et quatre niveaux sont dans un second groupe V5, V6, V7 et V8 à haute tension, dans lequel V4 < V5 < V6 < V7 ;
sélection du potentiel de remise à zéro parmi le second groupe lorsque le potentiel de donnée du signal d'électrode de colonne se trouve dans le premier groupe ou parmi le premier groupe quand le potentiel de donnée du signal d'électrode de colonne se trouve dans le second groupe ; et
dans les périodes autres que la période de remise à zéro, sélection d'un potentiel chaque fois parmi le même premier groupe quand le potentiel de donnée de signal d'électrode de colonne est dans le premier groupe ou sélection d'un potentiel chaque fois du même second groupe quand le potentiel de donnée du signal d'électrode de colonne est dans le second groupe.

3. Procédé suivant la revendication 2 comprenant les stades de :
réglage de la différence de potentiel entre le potentiel V4 du premier groupe et le potentiel V5 du second groupe, de manière à ce qu'il soit grand et réglage de la valeur absolue de la tension de remise à zéro appliquée au cristal liquide dans la période de remise à zéro pour qu'elle soit grande.

4. Procédé suivant la revendication 2 ou 3, comprenant les stades de :
dans une k^{ème} trame dans laquelle k est un nombre entier, réglage du potentiel de sélection marche du signal d'électrode de colonne à V5 du second groupe et du potentiel de sélection arrêt à V7 et réglage du potentiel de remise à zéro du signal d'électrode de ligne à V1, du potentiel de sélection à V8 et du potentiel de non-sélection à V6 ; et
dans une (k+1)^{ème} trame subséquente, réglage du potentiel de sélection marche du signal d'électrode de colonne à V4 du premier groupe et du potentiel de sélection arrêt à V2 ; et réglage du potentiel de remise à zéro du signal d'électrode de ligne à V8, du potentiel de sélection à V1 et du potentiel de non-sélection à V3, le cristal liquide étant entraîné de manière alternée par une inversion de polarité à chaque trame.

5. Procédé suivant la revendication 2 ou 3, comprenant les stades de :
dans une k^{ème} trame (k étant un nombre entier), réglage d'un potentiel de sélection marche du signal d'électrode de colonne à V8 du second groupe et d'un potentiel de sélection arrêt à V6 ; et réglage du potentiel de remise à zéro du signal d'électrode de ligne à V1, du potentiel de sélection à V5 et du potentiel de non-sélection à V7 ; et
dans une (k+1)^{ème} trame subséquente, réglage du potentiel de sélection marche du signal d'électrode de colonne à V1 du premier groupe et du potentiel de sélection arrêt à V3 ; et réglage du potentiel de remise à zéro dû signal d'électrode de ligne à V8, du potentiel de sélection à V4 et du potentiel de non-sélection à V2 ; le cristal liquide étant entraîné de manière alternée par une inversion de polarité à chaque trame.

6. Procédé suivant la revendication 2 ou 3, comprenant en outre les stades de :
réglage pendant le laps de temps d'une trame d'un potentiel de sélection marche du signal d'électrode de colonne en faisant alterner des impulsions de V4 et de V5 ;
réglage pendant le laps de temps d'une trame d'un potentiel de sélection arrêt du signal d'électrode de colonne en faisant alterner des impulsions de V2 et de V7 ; et
dans une séquence y correspondant, le potentiel de remise à zéro du signal d'électrode de ligne est réglé en faisant alterner des impulsions de V8 et de V1, le potentiel de sélection est réglé en faisant alterner des impulsions de V1 et de V8 et le potentiel de non-sélection est réglé en faisant alterner des impulsions de V3 et V6, la polarité de chaque tension appliquée au cristal liquide étant inversée à chaque impulsion.

7. Procédé suivant la revendication 4 ou 6, dans lequel, les tensions sont réglées de manière à être dans la relation : V4 - V3 = V3 - V2 = V7 - V6 = V6 - V5.

8. Procédé suivant la revendication 2 ou 3, comprenant en outre les stades de :
réglage dans le laps de temps d'une trame d'un potentiel de sélection marche du signal d'électrode de colonne en faisant alterner des impulsions de V1 et de V8;
réglage dans le laps de temps d'une trame d'un potentiel de sélection arrêt du signal d'électrode de colonne en faisant alterner des impulsions de V3 et de V6; et
dans une séquence y correspondant, le potentiel de remise à zéro du signal d'électrode de ligne est réglé en faisant alterner des impulsions de V8 et V1, le potentiel de sélection est réglé en faisant alterner des impulsions de V4 et de V5, et le potentiel de non-sélection est réglé en faisant alterner des impulsions de V2 et de V7, la polarité de chaque tension appliquée au cristal liquide étant inversée à chaque impulsion.

9. Procédé suivant la revendication 5 ou 8, dans lequel les tensions sont réglées de manière à être dans la relation : V3 - V2 = V2 - V1 = V8 - V7 = V7 - V6.

10. Procédé suivant la revendication 6 ou 8, dans lequel lorsqu'un temps unitaire équivalent à la période de sélection est désigné 1H, la largeur d'impulsion d'un signal FR qui fait que le signal d'électrode de ligne et le signal d'électrode de colonne alternent est 1H, et la phase du signal FR est réglée de manière à se décaler de (1H/2) par rapport à la période de sélection du signal Yn d'électrode de ligne.

11. Procédé suivant la revendication 6 ou 8, comprenant le stade de :
attaque du cristal liquide d'une manière alternée par une combinaison d'inversion de polarité à chaque temps unitaire (1H) équivalent à la période de sélection et par une inversion de polarité à chaque trame de manière que la polarité d'une tension appliquée au cristal liquide soit inversée à chaque 1H, et, lorsque la polarité au début d'une k^{ème} trame, k étant un nombre entier, est positive, la polarité au début de la (k+1)^{ème} trame est rendue négative lorsque la polarité au début d'une k^{ème} trame (k étant un nombre entier) est négative, la polarité au début de la (k+1)^{ème} trame est rendue positive.

12. Procédé suivant l'une quelconque des revendications 2 à 11, comprenant les stades de :
réglage du premier groupe de tensions et du second groupe de tensions de manière à ce qu'ils soient symétriques dans les directions positive et négative par rapport à un centre du potentiel à la terre.
